(19) **Europäisches Patentamt** / **European Patent Office** / **Office européen des brevets**

(11) **EP 4 686 250 A1**

(12) **EUROPEAN PATENT APPLICATION**
published in accordance with Art. 153(4) EPC

(43) Date of publication:
**28.01.2026 Bulletin 2026/05**

(21) Application number: **24792002.8**

(22) Date of filing: **16.04.2024**

(51) International Patent Classification (IPC):
**H04W 24/02** (2009.01)    **H04W 4/38** (2018.01)

(52) Cooperative Patent Classification (CPC):
**H04W 4/38; H04W 24/02; H04W 24/08**

(86) International application number:
**PCT/CN2024/088095**

(87) International publication number:
**WO 2024/217417 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 CN 202310424395**

(71) Applicant: **Huawei Technologies Co., Ltd.
Shenzhen, Guangdong 518129 (CN)**

(72) Inventors:
• **WANG, Wei
Nanjing, Jiangsu 210093 (CN)**

• **LI, Kaiying
Nanjing, Jiangsu 210093 (CN)**
• **DU, Rui
Shenzhen, Guangdong 518129 (CN)**
• **NAREN, Gerile
Shenzhen, Guangdong 518129 (CN)**
• **HAN, Xiao
Shenzhen, Guangdong 518129 (CN)**

(74) Representative: **Maiwald GmbH
Elisenhof
Elisenstraße 3
80335 München (DE)**

(54) **MEASUREMENT METHOD, AND APPARATUS**

(57)    This application provides a measurement method and an apparatus, applied to wireless local area network systems supporting IEEE 802.11bf, supporting IEEE 802.11ax or other IEEE 802.11 series protocols. In the method, a measurement initiation apparatus determines a first measurement template, and sends a first trigger request message including a first template identifier of the first measurement template. The first measurement template indicates at least one first measurement response apparatus and at least one second measurement response apparatus, the first measurement response apparatus is configured to send a first measurement message, and the second measurement response apparatus is configured to receive the first measurement message. Therefore, a plurality of measurement response apparatuses are indicated in a sensing measurement process to perform measurement based on the first measurement template. This can reduce a quantity of signaling transmissions in measurement, and reduce occupation of wireless channel resources in the sensing measurement process.

FIG. 3A

**(Cont. next page)**

CONT.
FROM
FIG. 3A

CONT.
FROM
FIG. 3A

CONT.
FROM
FIG. 3A

CONT.
FROM
FIG. 3A

Step 305: The first
measurement response
apparatus sends a first
measurement message
based on the first
measurement template

First
measurement
message

Step 306: The second
measurement response
apparatus receives the
first measurement
message based on the
first measurement
template

Optionally, step 307: The
measurement initiation apparatus
sends a first report request message

First report request message

Optionally, step 308:
The second
measurement response
apparatus sends a first
measurement report

First measurement report

FIG. 3B

**Description**

CROSS-REFERENCE TO RELATED APPLICATIONS

This application claims priority to Chinese Patent Application No. 202310424395.7, filed with the China National Intellectual Property Administration on April 18, 2023 and entitled "MEASUREMENT METHOD AND APPARATUS", which is incorporated herein by reference in its entirety.

TECHNICAL FIELD

This application relates to the field of communication technologies, and in particular, to a measurement method and an apparatus.

BACKGROUND

As wireless local area network technologies develop, a large quantity of devices like mobile phone, computers, wireless routers, and smart home devices supporting the wireless local area network technologies become ubiquitous in people's surroundings. During wireless communication, these wireless local area network devices establish communication links and continuously monitor channel changes of the wireless links. Signals sent by the wireless local area network devices are typically received after being reflected, diffracted, and scattered by various obstacles. By analyzing the wireless signals affected by the various obstacles, for example, channel state information (channel state information, CSI), it is possible to infer and perceive the surrounding environment, which has led to the emergence of a wireless local area network (wireless local area network, WLAN) sensing technology.

In a wireless sensing measurement process, there may be one measurement initiator and a plurality of measurement responders. The measurement initiator needs to obtain measurement results of links between the measurement initiator and the measurement responders, and also measurement results of links between the measurement responders. However, if there are a large quantity of measurement responders, occupied wireless channel resources linearly increase with the quantity of measurement responders in the wireless sensing measurement process.

Therefore, how to reduce occupation of wireless channel resources in a wireless sensing measurement process and improve wireless sensing measurement efficiency is an urgent problem

SUMMARY

This application provides a measurement method and an apparatus, to reduce occupation of wireless channel resources in a wireless sensing measurement process and improve wireless sensing measurement efficiency.

According to a first aspect, this application provides a measurement method. The method includes: A measurement initiation apparatus determines a first measurement template, where the first measurement template indicates at least one first measurement response apparatus and at least one second measurement response apparatus, the first measurement response apparatus is configured to send a first measurement message, and the second measurement response apparatus is configured to receive the first measurement message; and the measurement initiation apparatus sends a first trigger request message, where the first trigger request message includes a first template identifier of the first measurement template.

According to the method provided in this application, in a measurement process, the measurement initiation apparatus indicates, by using a measurement template, how a plurality of measurement response apparatuses receive and send a measurement message, to simultaneously indicate, only transmitting a small amount of information about the measurement template in the measurement process, the plurality of measurement response apparatuses to complete measurement of channel information of a large quantity of links. This can reduce a quantity of signaling transmissions in measurement, reduce occupation of wireless channel resources in a sensing measurement process, reduce measurement overheads, and improve measurement efficiency.

In a possible implementation, the first trigger request message further includes a first seed sequence; and the first seed sequence is used to update an identity of at least one of the at least one first measurement response apparatus and/or the at least one second measurement response apparatus.

In a possible implementation, when the first seed sequence is used to update an identity of one of the at least one first measurement response apparatus, the first measurement response apparatus whose identity is to be updated is updated to an apparatus that receives the first measurement message; and/or
when the first seed sequence is used to update an identity of one of the at least one second measurement response apparatus, the second measurement response apparatus whose identity is to be updated is updated to an apparatus that sends the first measurement message.

According to the foregoing method, a seed sequence is flexibly used to update an identity of each measurement response apparatus, so that the measurement response apparatus flexibly switches between an apparatus that sends the measurement message and an apparatus that receives the measurement message. In this flexible identity update manner, one measurement template can be repeatedly used for a plurality of times with different seed sequences. The measurement initiation apparatus can measure, with only a few measurement templates, links between the plurality of measurement response apparatuses. This reduces time for configuring the measurement template and reduces storage space required by the measurement template in the measurement initiation apparatus and the measurement response apparatus.

In a possible implementation, the first measurement template includes at least one of the following: the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, where X is greater than 0;

receiver node quantity information indicating a quantity Y of the at least one second measurement response apparatus, where Y is greater than 0;

transmitter node information including X pieces of first information, where each piece of first information includes at least one of the following: an apparatus identifier of a first measurement response apparatus; and power control information; and

receiver node information including Y pieces of second information, where each piece of second information includes at least one of the following: an apparatus identifier of a second measurement response apparatus; and sender indication information indicating one or more of the at least one first measurement response apparatus.

In a possible implementation, a length of the apparatus identifier of the first measurement response apparatus is less than a length of an association identifier AID of the first measurement response apparatus or a length of a measurement session association identifier.

In a possible implementation, a length of the apparatus identifier of the second measurement response apparatus is less than a length of an association identifier AID of the second measurement response apparatus or a length of a measurement session association identifier.

According to the foregoing method, a length of an apparatus identifier is less than a length of an association identifier of a measurement response apparatus or a length of a measurement session association identifier. This can reduce signaling overheads in the measurement process, and improve measurement efficiency.

In a possible implementation, the method further includes: The measurement initiation apparatus sends a first sensing measurement setup message, where the first sensing measurement setup message includes at least one of the following:

an apparatus identifier of the at least one first measurement response apparatus and an apparatus identifier of the at least one second measurement response apparatus; and

at least one measurement template, where the at least one measurement template includes the first measurement template.

In a possible implementation, the first trigger request message further includes first indication information, and when there is an apparatus that does not participate in measurement in the at least one first measurement response apparatus and the at least one second measurement response apparatus, the first indication information indicates a measurement response apparatus that actually sends the first measurement message and/or a measurement response apparatus that actually receives the first measurement message in the at least one first measurement response apparatus and the at least one second measurement response apparatus.

According to the foregoing method, by using the first indication information, a receiver node (namely, a second measurement response apparatus) can adjust a process of decoding the first measurement message based on a quantity of transmitter nodes (namely, first measurement response apparatuses), so that the first measurement message is correctly decoded and measured when some transmitter nodes are missing. In addition, a transmitter node that does not send the first measurement message does not need to measure the first measurement message or perform result feedback. This reduces overheads of measurement result feedback. Further, a receiver node that does not participate in measurement is indicated, so that a transmitter node can select, based on an actual quantity of receiver nodes, an appropriate sending manner and transmit power to send the first measurement message. This improves measurement efficiency.

In a possible implementation, the method further includes: The measurement initiation apparatus sends a first sensing request message, where the first sensing request message is used to determine the apparatus that does not participate in measurement in the at least one first measurement response apparatus and the at least one second measurement response apparatus.

In a possible implementation, the method further includes: The measurement initiation apparatus sends a first report request message, where the first report request message indicates to report a measurement report; and the measurement initiation apparatus receives a first measurement report from the at least one second measurement response apparatus, where the first measurement report includes a measurement result of the first measurement message.

In a possible implementation, before the measurement initiation apparatus sends the first trigger request message, the method further includes:

The measurement initiation apparatus sends a second trigger request message, where the second trigger request message is used to determine a receive power for receiving, by the at least one second measurement response apparatus, a second measurement message from the first measurement response apparatus; and the measurement initiation apparatus determines the power control information in the first measurement template based on at least one receive power for the second measurement message.

The transmit power is indicated by the power control information, so that the measurement initiation apparatus coordinates the transmit power for the measurement message, and severe interference does not occur at a receiving end for measurement messages sent by different measurement response apparatuses. This can avoid a case in which measurement cannot be performed due to channel interference.

According to a second aspect, this application provides a measurement method. The method includes: A first measurement response apparatus receives a first trigger request message from a measurement initiation apparatus, where the first trigger request message includes a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and the first measurement response apparatus sends the first measurement message based on the first measurement template.

In a possible implementation, the first trigger request message further includes a first seed sequence; and the first seed sequence is used to update an identity of at least one of the at least one first measurement response apparatus and/or the at least one second measurement response apparatus.

In a possible implementation, when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

In a possible implementation, the first measurement template includes at least one of the following: the first template identifier; multiplexing type information indicating the at least one first measurement response apparatus to send the first measurement message in at least one of the following manners: time division multiplexing, frequency division multiplexing, and spatial division multiplexing; transmitter node quantity information indicating a quantity X of the at least one first measurement response apparatus, where X is greater than 0; receiver node quantity information indicating a quantity Y of the at least one second measurement response apparatus, where Y is greater than 0; transmitter node information including X pieces of first information, where each piece of first information includes at least one of the following: an apparatus identifier of a first measurement response apparatus; and power control information; and receiver node information including Y pieces of second information, where each piece of second information includes at least one of the following: an apparatus identifier of a second measurement response apparatus; and sender indication information indicating one or more of the at least one first measurement response apparatus.

In a possible implementation, a length of the apparatus identifier of the first measurement response apparatus is less than a length of an association identifier AID of the first measurement response apparatus or a length of a measurement session association identifier.

According to a third aspect, this application provides a measurement method. The method includes: A second measurement response apparatus receives a first trigger request message from a measurement initiation apparatus, where the first trigger request message includes a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and the second measurement response apparatus receives the first measurement message based on the first measurement template.

In a possible implementation, the first trigger request message further includes a first seed sequence; and the first seed sequence is used to update an identity of at least one of the at least one first measurement response apparatus and/or the at least one second measurement response apparatus.

In a possible implementation, when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

In a possible implementation, the first measurement template includes at least one of the following: the first template identifier; multiplexing type information indicating the at least one first measurement response apparatus to send the first measurement message in at least one of the following manners: time division multiplexing, frequency division multiplexing, and spatial division multiplexing; transmitter node quantity information indicating a quantity X of the at least one first measurement response apparatus, where X is greater than 0; receiver node quantity information indicating a quantity Y of the at least one second measurement response apparatus, where Y is greater than 0; transmitter node information including X pieces of first information, where each piece of first information includes at least one of the following: an apparatus identifier of a first measurement response apparatus; and power control information; and receiver node information including Y pieces of second information, where each piece of second information includes at least one of the following: an apparatus identifier of a second measurement response apparatus; and sender indication information indicating one or more of the at least one first measurement response apparatus.

In a possible implementation, a length of the apparatus identifier of the second measurement response apparatus is less than a length of an association identifier AID of the second measurement response apparatus or a length of a measurement session association identifier.

In a possible implementation, that the second measurement response apparatus receives the first measurement message based on the first measurement template includes: The second measurement response apparatus receives the first measurement message from the first measurement response apparatus indicated by the sender indication information.

According to a fourth aspect, a communication apparatus is provided. The communication apparatus may be the foregoing measurement initiation apparatus or measurement response apparatus in the first aspect to the third aspect. The communication apparatus may include a communication unit and a processing unit, to perform any one of the first aspect to the third aspect or perform any one of the possible implementations of the first aspect to the third aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may include a transmitter and a receiver, or the communication unit includes a transmitter machine and a receiver machine.

Optionally, the communication apparatus further includes modules that may be configured to perform any one of the first aspect to the third aspect or perform any one of the possible implementations of the first aspect to the third aspect.

According to a fifth aspect, a communication apparatus is provided. The communication apparatus may be the foregoing measurement initiation apparatus or measurement response apparatus in the first aspect to the third aspect. The communication apparatus may include a processor and a memory, to perform any one of the first aspect to the third aspect or perform any one of the possible implementations of the first aspect to the third aspect. Optionally, a communication interface is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the third aspect or perform any one of the possible implementations of the first aspect to the third aspect.

Optionally, there are one or more processors, and there are one or more memories.

Optionally, the memory may be integrated with the processor, or the memory and the processor are disposed separately.

Optionally, the communication interface may include a transmitter machine (transmitter) and a receiver machine (receiver).

According to a sixth aspect, a communication apparatus is provided. The communication apparatus may be the foregoing measurement initiation apparatus or measurement response apparatus. The communication apparatus may include a processor, to perform any one of the first aspect to the third aspect or perform any one of the possible implementations of the first aspect to the third aspect. The processor is coupled to a memory. Optionally, the communication apparatus further includes the memory. Optionally, the communication apparatus further includes a communication interface, and the processor is coupled to the communication interface.

In an implementation, when the communication apparatus is the measurement initiation apparatus or measurement response apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a system is provided. The system includes the foregoing measurement initiation apparatus, first measurement response apparatus, and second measurement response apparatus. The measurement initiation apparatus may be configured to perform a function performed by the measurement initiation apparatus in the first aspect, the first measurement response apparatus may be configured to perform a function performed by the first measurement response apparatus in the second aspect, and the second measurement response apparatus may be configured to perform a function performed by the second measurement response apparatus in the third aspect.

According to an eighth aspect, a computer program product is provided. The computer program product includes a computer program (which may also be referred to as code or instructions). When the computer program is run, a computer is enabled to perform any one of the first aspect to the third aspect or perform any one of the possible implementations of the first aspect to the third aspect.

According to a ninth aspect, a computer-readable storage medium is provided. The computer-readable medium stores a computer program (which may also be referred to as code or instructions). When the computer program is run on a computer, the computer is enabled to perform any one of the first aspect to the third aspect or perform any one of the possible implementations of the first aspect to the third aspect.

According to a tenth aspect, a chip is provided. The chip may include a processor. The processor is coupled to a memory, and may be configured to perform any one of the first aspect to the third aspect or perform any one of the possible implementations of the first aspect to the third aspect. Optionally, the chip further includes the memory. The memory is configured to store a computer program (which may also be referred to as code or instructions). The processor is configured to invoke the computer program from the memory and run the computer program, so that a device on which the chip is installed performs any one of the first aspect to the third aspect or performs any one of the possible implementations of the first aspect to the third aspect.

According to an eleventh aspect, a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect to the third aspect or any one of the possible implementations of the first aspect to the third aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the communication apparatus is a measurement initiation apparatus or measurement response apparatus. The interface circuit may be a radio frequency processing chip in the measurement initiation apparatus or measurement response apparatus, and the processing circuit may be a baseband processing chip in the measurement initiation apparatus or measurement response apparatus.

In another implementation, the communication apparatus may be a part of component in the measurement initiation apparatus or measurement response apparatus, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

These or other aspects of this application are more concise and easier to understand in the description of the following embodiments.

BRIEF DESCRIPTION OF DRAWINGS

FIG. 1 is a diagram of a network architecture to which an embodiment of this application is applicable;

FIG. 2 is a schematic flowchart of an existing measurement method;

FIG. 3A and FIG. 3B are a schematic flowchart of a measurement method according to an embodiment of this application;

FIG. 4 is a diagram of a structure of a measurement template according to an embodiment of this application;

FIG. 5 is a diagram of a structure of first information according to an embodiment of this application;

FIG. 6 is a diagram of a structure of second information according to an embodiment of this application;

FIG. 7 is a diagram of a structure of sender indication information according to an embodiment of this application;

FIG. 8 is a schematic flowchart of a measurement method according to an embodiment of this application;

FIG. 9 is a schematic flowchart of a measurement method according to an embodiment of this application;

FIG. 10 is a schematic flowchart of measurement planning according to an embodiment of this application;

FIG. 11 is a schematic flowchart of a measurement method according to an embodiment of this application;

FIG. 12 is a schematic flowchart of a measurement method according to an embodiment of this application;

FIG. 13 is a diagram of a structure of a communication apparatus according to an embodiment of this application; and

FIG. 14 is a diagram of a structure of a communication apparatus according to an embodiment of this application.

DESCRIPTION OF EMBODIMENTS

The following describes in detail embodiments of this application with reference to the accompanying drawings of the specification.

Embodiments of this application are applicable to a WLAN scenario, for example, are applicable to Institute of Electrical and Electronics Engineers (Institute of Electrical and Electronics Engineers, IEEE) 802.11 series standards, for example, the 802.11ax standard, or a next generation thereof, for example, the 802.11be standard, Wi-Fi 7 or extremely high throughput (extremely high throughput, EHT), 802.11ad, 802.11ay, or 802.11bf. Alternatively, embodiments of this application are applicable to a wireless local area network system like an internet of things (internet of things, IoT) network or a vehicle-to-everything (Vehicle to X, V2X) network. Certainly, embodiments of this application are alternatively applicable to other possible communication systems, for example, a long term evolution (long term evolution, LTE) system, a new radio (new radio, NR) system, and a future 6G communication system.

In this application, "at least one" means one or more, and "a plurality of" means two or more. "And/Or" is an association relationship for describing associated objects and represents that three relationships may exist. For example, A and/or B may represent the following three cases: Only A exists, both A and B exist, and only B exists.

The following uses an 802. 11bf scenario as an example for description in embodiments of this application. Embodiments of this application relate to a sensing technology. The following describes related content of the sensing technology.

Sensing measurement, also known as wireless sensing or WLAN sensing, means that a transmitting end and a receiving end perform signal transmission to discover a target or determine a target status. WLAN sensing means that a station (station, STA) having a WLAN sensing capability uses a received WLAN signal to detect feature information of an expected target in a given environment. For example, the feature information includes one or more of a distance, a speed, an angle, a motion, existence or proximity, a gesture, and the like. The target includes one or more of an object, a person, an animal, and the like. The environment includes one or more of a room, a house, a vehicle, an enterprise, and the like.

For example, a transmitting end may send a signal for sensing measurement to a receiving end, and the receiving end may measure the signal to obtain a channel estimation result, for example, CSI. The receiving end may perform sensing based on the CSI. Alternatively, the receiving end may send the channel estimation result to the transmitting end, and the transmitting end performs target sensing or target status sensing based on the channel estimation result. For example, the receiving end or the transmitting end may process the CSI, to determine whether a moving object exists in an environment.

In a sensing measurement process, devices that participate in sensing are mainly as follows.

Sensing initiator (Sensing initiator): A sensing initiator is a device that initiates a sensing measurement procedure and sends a sensing measurement setup request. For a directional multi-gigabit (directional multi-gigabit, DMG) device, the sensing initiator is a device that sends a DMG sensing measurement setup request frame. For a non-DMG (non-DMG) device, the sensing initiator is a device that sends a sensing measurement setup request frame. In this application, the sensing initiator may also be referred to as a sensing initiation apparatus or the like.

Sensing responder (Sensing responder): A sensing responder is a device that responds to a sensing procedure initiated by a sensing initiator and sends a sensing measurement response. For a non-DMG device, the sensing responder is a device that sends a sensing measurement setup response frame. For a DMG device, the sensing responder is a device that sends a DMG sensing measurement setup response frame. In this application, the sensing responder may also be referred to as a sensing response apparatus or the like.

In a WLAN, the sensing initiation apparatus may be an access point (access point, AP) or a station (station, STA), and the sensing response apparatus may also be an AP or a STA. This is not limited in this application.

The AP and the STA in embodiments of this application may be an AP and a STA that are applicable to IEEE 802.11 series standards. The AP is an apparatus that is deployed in a wireless communication network and that provides a wireless communication function for a STA associated with the AP. The AP may be used as a center of a communication system, and is usually a network-side product that supports MAC and PHY in 802.11 series standards, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) in 802.11 series standards, for example, a mobile phone or a notebook computer.

For example, the AP may be an access point used by a terminal device (for example, a mobile phone) to access a wired (or wireless) network, and is mainly deployed in a home, a building, or a campus, where a typical coverage radius is tens of meters to hundreds of meters. Certainly, the AP may alternatively be deployed outdoors. The access point is equivalent to a bridge that connects a wired network and a wireless network, and is mainly used to connect various wireless network clients together and then connect the wireless network to an ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family such as 802.11ay, 802.11ad, 802.11ax, 802.11ac, 802.11n, 802.11g, 802.11b, 802.11a, and a next-generation standard of 802.11be. The access point in this application may be an HE AP, an extremely high throughput (extremely high throughput, EHT) AP, or an access point applicable to a future-generation Wi-Fi standard.

The STA may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, or a computer that supports a Wi-Fi communication function, and the like. Optionally, the station may support the 802.11be standard. Alternatively, the station may support a plurality of wireless local area network (wireless local area network, WLAN) standards of the 802.11 family such as 802.11ay, 802.11ad, 802.11ax, 802.11ac, 802.11n, 802.11g, 802.11b, 802.11a, and a next-generation standard of 802.11be.

The station in this application may be a directional multi-gigabit (directional multi-gigabit, DMG) STA, an enhanced directional multi-gigabit EDMG (enhanced directional multi-gigabit, EDMG) STA, an HE STA, or an extremely high throughput (extremely high throughput, EHT) STA, or may be a STA applicable to a future-generation Wi-Fi standard.

The access point and the station in this application may alternatively be devices applied to an internet of vehicles, internet of things nodes, sensors, or the like in an internet of things (Internet of Things, IoT), smart cameras, smart remote controls, or smart water or electricity meters in a smart home, sensors in a smart city, or the like.

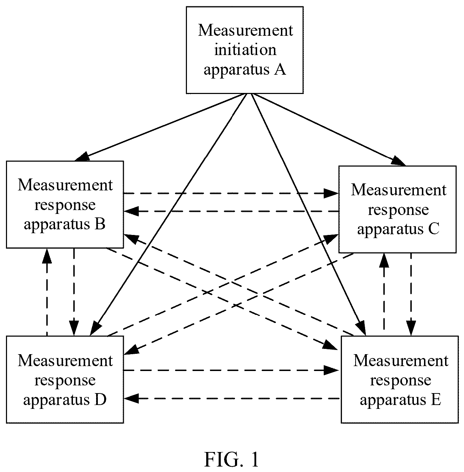

FIG. 1 is a diagram of a system architecture according to an embodiment of this application. The system may include a measurement initiation apparatus A and one or more measurement response apparatuses, for example, a measurement response apparatus B to a measurement response apparatus E in the figure. A quantity of measurement response apparatuses in the figure is merely an example. In actual application, the quantity of measurement response apparatuses is not limited and is determined based on an actual situation.

The measurement initiation apparatus A is responsible for coordination and control of a measurement process. The measurement initiation apparatus A coordinates and controls, by using control packets (transmission paths of the control packets are represented by solid lines in the figure), the plurality of measurement response apparatuses to perform measurement. The control packets include information exchange in a measurement setup process, and messages such as a request message and a trigger message in a measurement process. The measurement response apparatuses measure actual links by using measurement packets (transmission paths of the measurement packets are represented by dashed lines in the figure). The measurement packets may be null data packet (null data packet, NDP) packets. When performing measurement, the measurement response apparatuses may measure information about all bidirectional links between every two measurement response apparatuses, or may measure information about a unidirectional link or information about some links.

In embodiments of this application, the measurement initiation apparatus A serves as a measurement control role, and the measurement response apparatus B to the measurement response apparatus E actually send and/or receive the measurement packets, and perform measurement and measurement result report based on the measurement packets. However, roles of the measurement initiation apparatus and the measurement response apparatuses may be interchangeable. It is also allowed that a plurality of receiving ends all measure the measurement packets, or the measurement initiation apparatus serves as a receiving end by using a proxy node to perform measurement. In particular, the measurement initiation apparatus may also serve as a measurement response apparatus, and send and receive a measurement packet in the same way as another measurement response apparatus.

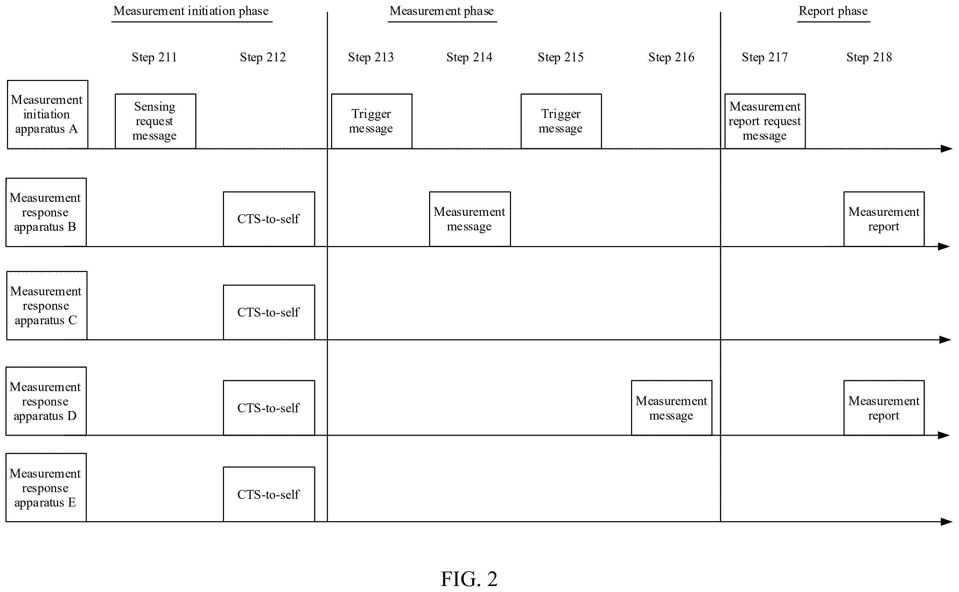

With reference to FIG. 1, as shown in FIG. 2, it is assumed that the measurement initiation apparatus A is responsible for coordination of a measurement procedure, and the procedure is used to complete measurement of a link between the measurement response apparatus B and the measurement response apparatus C and a link between the measurement response apparatus D and the measurement response apparatus E. In this case, according to a current sensing measurement procedure, the following steps may be included.

Step 211: In a measurement initiation phase, the measurement initiation apparatus A sends a sensing request (sensing polling) message, where the sensing request message is used to notify the plurality of measurement response apparatuses (for example, the measurement response apparatus B to the measurement response apparatus E) to prepare for sensing measurement.

Step 212: The measurement response apparatus B to the measurement response apparatus E each send a clear to send to-self (clear to send to-self, CTS-to-self) message, to determine to participate in the sensing measurement procedure.

Step 213: In a measurement phase, the measurement initiation apparatus A sends a trigger message (trigger frame, TF), where the trigger message is used to notify the measurement response apparatus B to send a measurement message, and request the measurement response apparatus C to measure the measurement message.

The measurement message may be a packet like an NDP, and this is not limited in this application.

Step 214: The measurement response apparatus B sends the measurement message, and the measurement response apparatus C measures the measurement message, to obtain a measurement result.

Step 215: The measurement initiation apparatus A sends a trigger message, where the trigger message is used to notify the measurement response apparatus D to send a measurement message, and request the measurement response apparatus E to measure the measurement message.

Step 216: The measurement response apparatus D sends the measurement message, and the measurement response apparatus E measures the measurement message, to obtain a measurement result.

Step 217: In a report phase, the measurement initiation apparatus A sends a measurement report request (Report Polling) message, to notify the measurement response apparatus C and the measurement response apparatus E to report the measurement results.

Step 218: The measurement response apparatus C and the measurement response apparatus E report, to the measurement initiation apparatus A by using measurement reports, the measurement results obtained in the measurement phase.

It can be learned from the foregoing procedure that in the measurement phase, the measurement initiation apparatus can only sequentially request, by using the trigger messages, the measurement response apparatuses to send the measurement messages. If there are a large quantity of measurement response apparatuses and a plurality of links need to be measured, trigger messages and NDPs need to be sent for a plurality of times. For example, when there are n measurement response apparatuses, there are n(n-1)/2 links between these measurement response apparatuses. If only one measurement response apparatus can send a measurement message each time, at least (n-1) measurement response apparatuses need to send measurement messages to ensure that each of the n(n-1)/2 links is measured once. In this case, one actual measurement process requires (n-1) rounds of measurement interaction, and a quantity of messages exchanged in the measurement process is at an O(n) level. Further, because receive/transmit switching needs to be performed between the trigger messages and the NDPs, and the switching takes long time, a quantity of resources consumed by the participating measurement response apparatuses to send the NDPs is large.

Therefore, this application provides a method, to reduce occupation of wireless channel resources in a wireless sensing measurement process and improve wireless sensing measurement efficiency. Details are described below.

This application is applicable to a plurality of sensing measurement processes, including but not limited to sensing measurement in WLAN sensing and DMG sensing measurement in DMG sensing. WLAN sensing may also be referred to as non-DMG sensing (Non-DMG Sensing), sensing (Sensing), or sub-7 GHz sensing (Sub-7 GHz Sensing), and for ease of description, is referred to as wireless local area network sensing below. DMG sensing may also be referred to as 60 GHz sensing (60 GHz Sensing) or millimeter wave sensing (Millimeter Wave Sensing, MMW Sensing), and for ease of description, is referred to as DMG sensing below.

In this application, names of messages, names of indication information, and names of fields in the following procedures are merely examples. As communication technologies evolve, the names of the messages, the names of the indication information, and the names of the fields in the following procedures may change. For example, a sensing measurement setup request (sensing measurement setup request) message may also evolve into a sensing measurement request (sensing measurement request) message, and the sensing measurement setup response (sensing measurement setup response) message may also evolve into a sensing measurement response (sensing measurement response) message. For another example, sensing measurement setup (sensing measurement setup) may also evolve into a sensing measurement session (sensing measurement session). Regardless of how the names of the messages, indication information, and fields change, as long as meanings of the messages, indication information, or fields are the same as those of the messages, indication information, or fields in this application, the messages, indication information, or fields fall within the protection scope of this application. A sequence of steps in the following procedures is merely an example. In actual application, the sequence of steps in each procedure may be adjusted.

A network architecture and a service scenario described in embodiments of this application are intended to describe technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

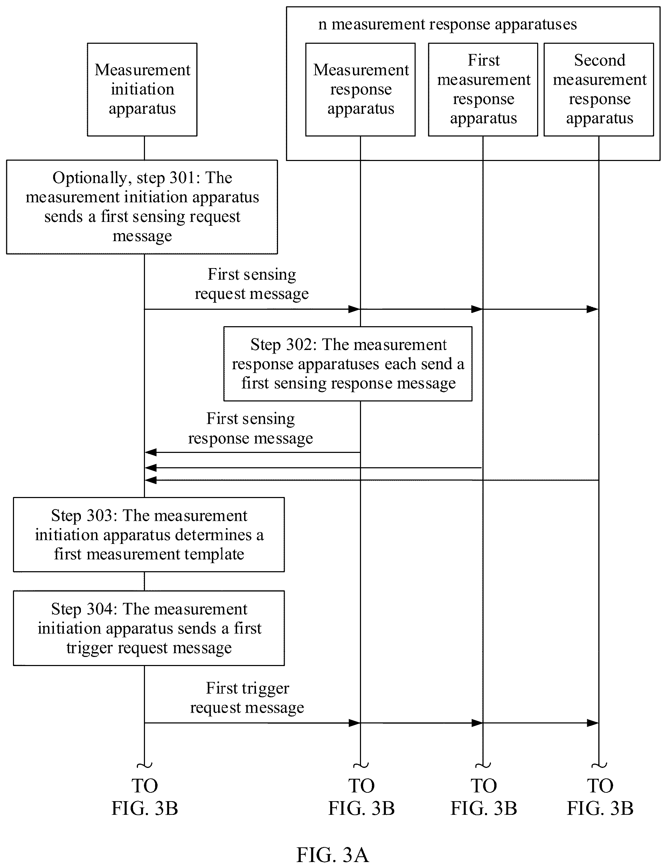

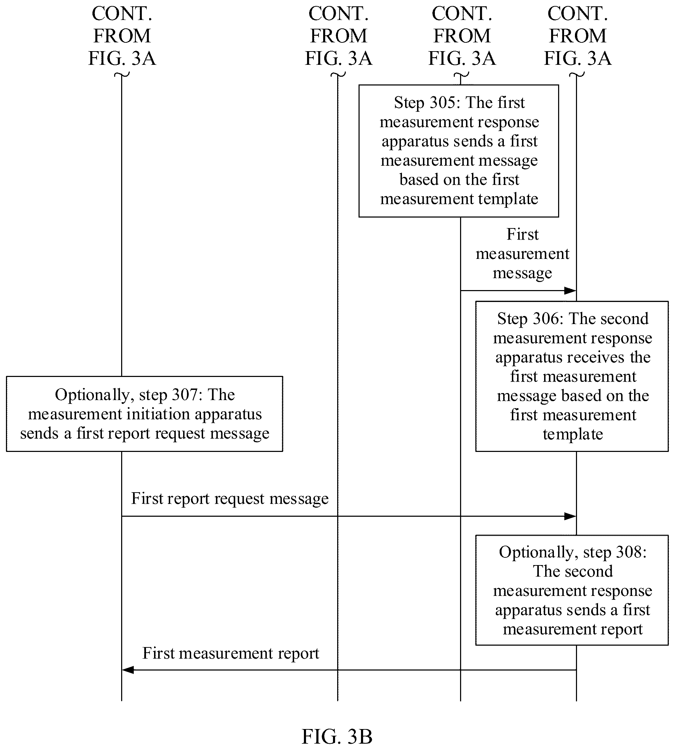

FIG. 3A and FIG. 3B are a schematic flowchart of a measurement method according to an embodiment of this application. When the method procedure provided in this embodiment of this application is applied to the system shown in FIG. 1, the measurement initiation apparatus or a chip or module in the measurement initiation apparatus in FIG. 1 may perform the method performed by a measurement initiation apparatus in the following procedure, and the measurement response apparatuses or chips or modules in the measurement response apparatuses in FIG. 1 may perform the method performed by measurement response apparatuses in the following procedure. It may be understood that a specific structure of an execution body of the method provided in this embodiment of this application is not specifically limited in the following embodiments, provided that a program that records code for the method provided in this embodiment of this application can be run to perform communication according to the method provided in this embodiment of this application. The method includes the following steps.

Optionally, step 301: The measurement initiation apparatus sends a first sensing request message, where the first sensing request message is used to determine an apparatus that does not participate in measurement.

Because there are a plurality of measurement response apparatuses, some measurement response apparatuses may be unable to participate in measurement. For example, measurement response apparatuses are in an offline state. The measurement initiation apparatus may send the first sensing request message to determine which measurement response apparatuses participate in measurement and which measurement response apparatuses do not participate in measurement.

Assuming that there are n (n>1) measurement response apparatuses, for each measurement response apparatus, if the measurement response apparatus receives the first sensing request message, the measurement response apparatus may perform step 302.

Step 302: The measurement response apparatuses each send a first sensing response message.

The first sensing response message may be a CTS-to-self message. If the measurement response apparatus sends the first sensing response message, it indicates that the measurement response apparatus determines to participate in a measurement procedure.

Correspondingly, for a measurement response apparatus, if the measurement initiation apparatus receives a first sensing response message from the measurement response apparatus, it may be determined that the measurement response apparatus participates in the measurement procedure; or if the measurement initiation apparatus does not receive a first sensing response message from the measurement response apparatus, it may be determined that the measurement response apparatus does not participate in the measurement procedure.

Step 303: The measurement initiation apparatus determines a first measurement template.

The measurement initiation apparatus may include at least one measurement template, and the measurement initiation apparatus may select one measurement template from the at least one measurement template as the first measurement template. The at least one measurement template in the measurement initiation apparatus may be preconfigured or predefined, or may be generated by the measurement initiation apparatus. This is not limited in this application.

In an implementation, the measurement initiation apparatus may include measurement planning. The measurement planning may be preconfigured or predefined, or may be generated by the measurement initiation apparatus. This is not limited in this application. The measurement planning may indicate information such as a quantity of measurement interactions and links between which measurement response apparatuses need to be measured in each round of measurement interaction.

The measurement initiation apparatus may determine, based on the measurement planning, links between which measurement response apparatuses need to be measured in the current round of measurement interaction, so that the measurement initiation apparatus can determine which measurement response apparatuses need to send measurement messages and which measurement response apparatuses need to receive the measurement messages, and determine a corresponding measurement template, namely, the first measurement template, from the at least one measurement template. For example, the measurement initiation apparatus includes a measurement template a and a measurement template b. The measurement template a indicates a measurement response apparatus B and a measurement response apparatus C to send measurement messages, and a measurement response apparatus D to receive the measurement messages. The measurement template b indicates a measurement response apparatus D and a measurement response apparatus E to send measurement messages, and a measurement response apparatus B to receive the measurement messages.

If a link between the measurement response apparatus D and the measurement response apparatus B and a link between the measurement response apparatus E and the measurement response apparatus E need to be measured in the current round of measurement interaction based on the measurement planning, it may be determined that the measurement response apparatus D and the measurement response apparatus E need to send the measurement messages. In this case, the measurement initiation apparatus may select the measurement template b, that is, use the measurement template b as the first measurement template.

In this application, the first measurement template is used as an example. The first measurement template may indicate at least one first measurement response apparatus and at least one second measurement response apparatus. In this application, a first measurement response apparatus may be an apparatus configured to send a measurement message, and a second measurement response apparatus may be an apparatus configured to receive the measurement message, where the measurement message may be a message like an NDP, and this is not limited in this application.

The n measurement response apparatuses in step 301 may include the at least one first measurement response apparatus and the at least one second measurement response apparatus.

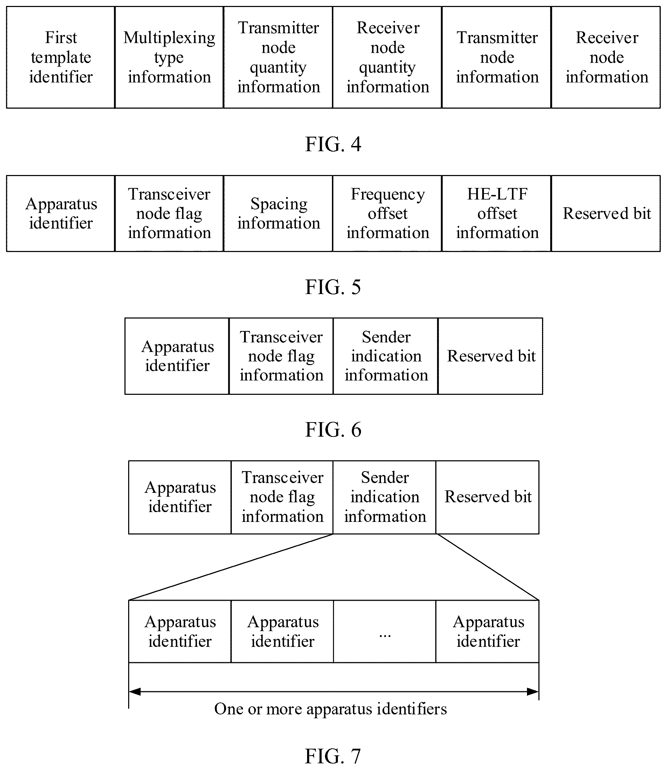

In this application, specific content included in the measurement template is not limited in this application. For example, the first measurement template is used as an example. As shown in FIG. 4, the first measurement template may include at least one of the following:

first template identifier identifying the first measurement template;
multiplexing type (mux type) information indicating the at least one first measurement response apparatus to send the first measurement message in at least one of the following manners: time division multiplexing, frequency division multiplexing, and spatial division multiplexing;
transmitter node quantity information indicating a quantity X of the at least one first measurement response apparatus, where X is greater than 0, for example, the transmitter node quantity information includes four bits, and a value range is 0000 to 1111, where 0000 indicates that only one measurement response apparatus sends the first measurement message, and 1111 indicates that 16 measurement response apparatuses send the first measurement message;
receiver node quantity information indicating a quantity Y of the at least one second measurement response apparatus, where Y is greater than 0, for example, the receiver node quantity information includes four bits, and a value range is 0000 to 1111, where 0000 indicates that only one measurement response apparatus receives the first measurement message, and 1111 indicates that 16 measurement response apparatuses receive the first measurement message;
transmitter node information including X pieces of first information, where the X pieces of first information one-to-one correspond to X first measurement response apparatuses; and
receiver node information including Y pieces of second information, where the Y pieces of second information one-to-one correspond to Y second measurement response apparatuses.

In an implementation, as shown in FIG. 5, first information includes at least one of the following: an apparatus identifier of a first measurement response apparatus;

power control information indicating a transmit power to send the first measurement message, where the power control information may also be referred to as a target receive power (target receive power) or the like;
transceiver node flag information indicating that an apparatus corresponding to the first information is used as a transmitter node for sending the first measurement message, for example, the transceiver node flag information includes one bit, and a value of the bit being 1 indicates that the apparatus corresponding to the first information is used as the transmitter node for sending the first measurement message;
spacing information indicating a frequency spacing used when the first measurement message is sent in a frequency division multiplexing manner;
frequency offset information indicating a frequency offset used when the first measurement message is sent in a frequency division multiplexing manner; and
HE-LTF offset information indicating a high efficiency long training field (high efficiency long training field, HE-LTF) offset used when the first measurement message is sent in a time division multiplexing manner.

The foregoing is merely an example. The first information may further include other content, for example, may further include a reserved bit, or the like. This is not limited in this application.

In an implementation, as shown in FIG. 6, second information includes at least one of the following: an apparatus identifier of a second measurement response apparatus;

transceiver node flag information indicating that an apparatus corresponding to the second information is used as a receiver node for receiving the first measurement message, for example, the transceiver node flag information includes one bit, and a value of the bit being 0 indicates that the apparatus corresponding to the second information is used as the receiver node for receiving the first measurement message; and

sender indication information indicating one or more of the at least one first measurement response apparatus, where the second measurement response apparatus corresponding to the apparatus identifier in the second information needs to receive and measure the first measurement messages sent by the one or more first measurement response apparatuses indicated by the sender indication information.

Each second measurement response apparatus may need to receive and measure only first measurement messages sent by some of the X first measurement response apparatuses, and may not need to measure first measurement messages sent by other first measurement response apparatuses. Therefore, the sender indication information may indicate the second measurement response apparatus to receive and measure first measurement messages sent by which first measurement response apparatuses.

Implementation 1: The sender indication information includes a bitmap, and each bit in the bitmap corresponds to one of the X first measurement response apparatuses. For example, if a bit in the bitmap is 0, it indicates that the second measurement response apparatus does not need to receive or measure the first measurement message sent by a first measurement response apparatus corresponding to the bit; or if a bit in the bitmap is 1, it indicates that the second measurement response apparatus needs to receive and measure the first measurement message sent by a first measurement response apparatus corresponding to the bit, and report a corresponding measurement result. A correspondence between the bit in the bitmap and the first measurement response apparatus may be predefined or preconfigured, or may be configured by the measurement initiation apparatus. This is not limited in this application.

Implementation 2: As shown in FIG. 7, the sender indication information includes an apparatus identifier of one first measurement response apparatus or apparatus identifiers of a plurality of first measurement response apparatuses, and the second measurement response apparatus receives the measurement message sent by the first measurement response apparatus corresponding to the apparatus identifier or the measurement messages sent by the plurality of first measurement response apparatuses corresponding to the plurality of apparatus identifiers.

In this implementation, the one or more first measurement response apparatuses are directly indicated by the apparatus identifiers, and the second measurement response apparatus receives and measures the first measurement message sent by the first measurement response apparatus corresponding to the apparatus identifier or the first measurement messages sent by the plurality of first measurement response apparatuses corresponding to the plurality of apparatus identifiers. For a first measurement message sent by a first measurement response apparatus other than the one or more first measurement response apparatuses in the X first measurement response apparatuses, the second measurement response apparatus may ignore the first measurement message.

The foregoing is merely an example. The second information may further include other content, for example, may further include third information, a reserved bit, or the like. This is not limited in this application. The third information may indicate an implementation of the sender indication information. For example, the third information includes one bit. If a value of the bit is 1, it indicates that the sender indication information includes a bitmap; or if the value of the bit is 0, it indicates that the sender indication information includes an apparatus identifier of one first measurement response apparatus or apparatus identifiers of a plurality of first measurement response apparatuses.

In this application, the apparatus identifier included in the first information may be an identifier allocated by the measurement initiation apparatus to the first measurement response apparatus. Likewise, the apparatus identifier included in the second information may be an identifier allocated by the measurement initiation apparatus to the second measurement response apparatus. Alternatively, the apparatus identifier of the first measurement response apparatus or the apparatus identifier of the second measurement response apparatus may be predefined or preconfigured. This is not limited in this application.

For example, in an implementation, assuming that there are n (n>1) measurement response apparatuses, the measurement initiation apparatus may include n pieces of identifier configuration information in a measurement setup message in a measurement setup phase, where one piece of identifier configuration information in the n pieces of identifier configuration information one-to-one corresponds to the n measurement response apparatuses. The identifier configuration information includes an association identifier (association identifier, AID) of the measurement response apparatus or a measurement session association identifier, and an apparatus identifier allocated by the measurement initiation apparatus to the measurement response apparatus. The apparatus identifier may also be referred to as a measurement participant identifier, or the like. This is not limited in this application.

After obtaining the measurement setup message, the measurement response apparatus may determine, based on an apparatus identifier corresponding to the association identifier or the measurement session association identifier in the identifier configuration information included in the measurement setup message, the apparatus identifier allocated by the measurement initiation apparatus to the measurement response apparatus.

A length of the apparatus identifier is less than a length of the association identifier of the measurement response apparatus or a length of the measurement session association identifier. For example, a length of the apparatus identifier is less than 12 bits. A specific length of the apparatus identifier may be determined based on a quantity of measurement response apparatuses. For example, when there are 16 measurement response apparatuses, the length of the apparatus identifier may be 4 bits, that is, apparatus identifiers of the 16 measurement response apparatuses are respectively 0000, 0001, 0010, ..., 1111, and so on.

In an implementation, the length of the apparatus identifier is $\lceil \log_2 n \rceil$, where ⌈ ⌉ indicates rounding up, and n is the quantity of measurement response apparatuses.

In a subsequent measurement process, the measurement initiation apparatus includes the apparatus identifier in a message sent to the measurement response apparatus instead of including the association identifier or the measurement session association identifier. This reduces an amount of redundant information in signaling, reduces signaling overheads, reduces an amount of occupied signaling resources, and improves efficiency of an actual measurement procedure.

In this application, for ease of description, the apparatus identifier of the first measurement response apparatus is referred to as a first apparatus identifier, and the apparatus identifier of the second measurement response apparatus is referred to as a second apparatus identifier in the following description.

Step 304: The measurement initiation apparatus sends a first trigger request message, where the first trigger request message includes the first template identifier of the first measurement template.

Correspondingly, the first measurement response apparatus and the second measurement response apparatus receive the first trigger request message from the measurement initiation apparatus.

The first trigger request message may be used to trigger the at least one first measurement response apparatus and the at least one second measurement response apparatus to perform measurement based on the first template. The trigger request message may also be referred to as a trigger message (trigger frame, TF), or the like. This is not limited in this application. The first template identifier may also be replaced with other information that can indicate the first measurement template. This is not limited in this application.

In an implementation, the first trigger request message further includes first indication information, and when there is an apparatus that does not participate in measurement in the at least one first measurement response apparatus and the at least one second measurement response apparatus, the first indication information indicates a measurement response apparatus that actually sends the first measurement message and/or a measurement response apparatus that actually receives the first measurement message in the at least one first measurement response apparatus and the at least one second measurement response apparatus. In other words, the first indication information indicates an apparatus that participates in measurement in the at least one first measurement response apparatus and the at least one second measurement response apparatus, and/or the apparatus that does not participate in measurement in the at least one first measurement response apparatus and the at least one second measurement response apparatus.

For example, there are four measurement response apparatuses, which are a measurement response apparatus B to a measurement response apparatus E. If the measurement initiation apparatus determines that the measurement response apparatus C does not participate in measurement, the first indication information may indicate the measurement response apparatus C not to participate in measurement, and/or the measurement response apparatus B, the measurement response apparatus D, and the measurement response apparatus E to participate in measurement.

In an implementation, the first indication information includes a bitmap. Each bit in the bitmap corresponds to one first measurement response apparatus in the at least one first measurement response apparatus or one second measurement response apparatus in the at least one second measurement response apparatus. A correspondence between the bit in the bitmap and the first measurement response apparatus or the second measurement response apparatus may be predefined or preconfigured, or may be configured by the measurement initiation apparatus. This is not limited in this application.

For example, if a bit in the bitmap is 0, when the bit corresponds to a first measurement response apparatus, it indicates that the first measurement response apparatus corresponding to the bit does not participate in measurement, that is, does not send the first measurement message; or when the bit corresponds to a second measurement response apparatus, it indicates that the second measurement response apparatus corresponding to the bit does not participate in measurement, that is, does not receive the first measurement message.

If a bit in the first bitmap is 1, when the bit corresponds to a first measurement response apparatus, it indicates that the first measurement response apparatus corresponding to the bit participates in measurement, that is, sends the first measurement message; or when the bit corresponds to a second measurement response apparatus, it indicates that the second measurement response apparatus corresponding to the bit participates in measurement, that is, receives and measures the first measurement message. The reverse is also true. Details are not described again.

According to the foregoing method, by using the first indication information, a receiver node (namely, a second measurement response apparatus) can adjust a process of decoding the first measurement message based on a quantity of transmitter nodes (namely, first measurement response apparatuses), so that the first measurement message is correctly decoded and measured when some transmitter nodes are missing. In addition, a transmitter node that does not send the first measurement message does not need to measure the first measurement message or perform result feedback. This reduces overheads of measurement result feedback. Further, a receiver node that does not participate in measurement is indicated, so that a transmitter node can select, based on an actual quantity of receiver nodes, an appropriate sending manner and transmit power to send the first measurement message. This improves measurement efficiency.

In a possible implementation, the first trigger request message may further include a first seed sequence; and the first seed sequence is used to update an identity of at least one of the at least one first measurement response apparatus and/or the at least one second measurement response apparatus. When the first seed sequence is used to update an identity of one of the at least one first measurement response apparatus, the first measurement response apparatus whose identity is to be updated is updated to an apparatus that receives the first measurement message. When the first seed sequence is used to update an identity of one of the at least one second measurement response apparatus, the second measurement response apparatus whose identity is to be updated is updated to an apparatus that sends the first measurement message.

In this implementation, for each measurement response apparatus in the n measurement response apparatuses, the first seed sequence and the apparatus identifier of the measurement response apparatus may together indicate whether the measurement response apparatus is the first measurement response apparatus that sends the first measurement message or the second measurement response apparatus that receives the first measurement message. For example, for a measurement response apparatus, a preset hash (hash) function operation is performed based on the first seed sequence and an apparatus identifier of the measurement response apparatus, to obtain an updated apparatus identifier. If the updated apparatus identifier is the first apparatus identifier in the first measurement template, the measurement response apparatus sends the first measurement message based on the first measurement template; or if the updated apparatus identifier is the second apparatus identifier in the first measurement template, the measurement response apparatus receives the first measurement message based on the first measurement template.

A specific form of a preset hash function is not limited in this application. The preset hash function may also be replaced with another function, provided that a function required in this application can be implemented. A seed sequence may be a bit sequence of a preset length, for example, a 16-bit sequence.

For example, there are four measurement response apparatuses, which are a measurement response apparatus B to a measurement response apparatus E and correspond to apparatus identifiers 00, 01, 10, and 11. It is assumed that the measurement initiation apparatus determines to use a first measurement template, in the first measurement target, the first apparatus identifiers are 00 and 10 and the second apparatus identifiers are 01 and 11. To be specific, the first measurement template indicates the measurement response apparatuses whose apparatus identifiers are 00 and 10 to send the first measurement messages, and indicates the measurement response apparatuses whose apparatus identifiers are 01 and 11 to receive the first measurement messages. Assuming that two rounds of measurement interaction are required, apparatus identifiers of apparatuses that receive or send the first measurement messages in each round of measurement interaction may be shown in Table 1.

Table 1

|  | Apparatus identifiers in the first measurement template | First round of measurement interaction | Second round of measurement interaction |
|---|---|---|---|
| Apparatus identifiers of apparatuses that send the first measurement messages | 00 and 10 | 00 and 11 | 01 and 10 |
| Apparatus identifiers of apparatuses that receive the first measurement messages | 01 and 11 | 01 and 10 | 00 and 11 |

It can be learned from Table 1 that, in the first round of measurement interaction, the measurement response apparatuses whose apparatus identifiers are 00 and 11 need to send the first measurement messages, and the measurement response apparatuses whose apparatus identifiers are 01 and 10 need to receive the first measurement messages; and in the second round of measurement interaction, the measurement response apparatuses whose apparatus identifiers are 01 and 10 need to send the first measurement messages, and the measurement response apparatuses whose apparatus identifiers are 00 and 11 need to receive the first measurement messages. Therefore, the apparatus identifiers do not match those in the first measurement template, and the first measurement template cannot be directly used in the two rounds of measurement interaction.

Therefore, in the first round of measurement interaction, the measurement initiation apparatus may select a first seed sequence, and perform the preset hash (hash) function operation on the original apparatus identifier of each measurement response apparatus and the first seed sequence, to obtain an updated apparatus identifier. For example, in the first round of measurement interaction, the preset hash function operation is performed on the apparatus identifier 00 of the measurement apparatus B and the first seed sequence, to obtain an updated apparatus identifier 00; the preset hash function operation is performed on the apparatus identifier 01 of the measurement apparatus C and the first seed sequence, to obtain an updated apparatus identifier 01; the preset hash function operation is performed on the apparatus identifier 10 of the measurement apparatus D and the first seed sequence, to obtain an updated apparatus identifier 11; and the preset hash function operation is performed on the apparatus identifier 11 of the measurement apparatus E and the first seed sequence, to obtain an updated apparatus identifier 10. In this way, in the first round of measurement interaction, the measurement initiation apparatus can indicate the measurement response apparatus B to the measurement response apparatus E to use the first measurement template to perform measurement.

Correspondingly, the measurement apparatus B may obtain the updated apparatus identifier 00 based on the first seed sequence and the apparatus identifier 00 of the measurement apparatus B. The updated apparatus identifier of the measurement apparatus B is the first apparatus identifier in the first measurement template. In this case, the measurement apparatus B may send the first measurement message based on the first measurement template.

The measurement apparatus C may obtain the updated apparatus identifier 01 based on the first seed sequence and the apparatus identifier 01 of the measurement apparatus C. The updated apparatus identifier of the measurement apparatus C is the second apparatus identifier in the first measurement template. In this case, the measurement apparatus C may receive the first measurement message based on the first measurement template.

The measurement apparatus D may obtain the updated apparatus identifier 11 based on the first seed sequence and the apparatus identifier 10 of the measurement apparatus D. The updated apparatus identifier of the measurement apparatus D is the second apparatus identifier in the first measurement template. In this case, the measurement apparatus D may receive the first measurement message based on the first measurement template.

The measurement apparatus E may obtain the updated apparatus identifier 10 based on the first seed sequence and the apparatus identifier 11 of the measurement apparatus E. The updated apparatus identifier of the measurement apparatus E is the first apparatus identifier in the first measurement template. In this case, the measurement apparatus E may send the first measurement message based on the first measurement template.

Likewise, in the second round of measurement interaction, the measurement initiation apparatus may select a second seed sequence, and perform the preset hash function operation on the original apparatus identifier of each measurement response apparatus and the second seed sequence, to obtain an updated apparatus identifier. For example, in the second round of measurement interaction, to continue to use the first measurement template, the preset hash function operation is performed on the apparatus identifier 00 of the measurement apparatus B and the second seed sequence, to obtain an updated apparatus identifier 01; the preset hash function operation is performed on the apparatus identifier 01 of the measurement apparatus C and the second seed sequence, to obtain an updated apparatus identifier 00; the preset hash function operation is performed on the apparatus identifier 10 of the measurement apparatus D and the second seed sequence, to obtain an updated apparatus identifier 10; and the preset hash function operation is performed on the apparatus identifier 11 of the measurement apparatus E and the second seed sequence, to obtain an updated apparatus identifier 11. In this way, in the second round of measurement interaction, the measurement initiation apparatus can indicate the measurement response apparatus B to the measurement response apparatus E to continue to use the first measurement template to perform measurement.

However, in the second round of measurement interaction, identities of the measurement response apparatuses are updated by using the second seed sequence. For example, the measurement apparatus B and the measurement apparatus E are updated from apparatuses that send the first measurement message to apparatuses that receive the first measurement message, and the measurement apparatus C and the measurement apparatus D are updated from apparatuses that receive the first measurement message to apparatuses that send the first measurement message.

According to the foregoing method, a seed sequence is flexibly used to update an identity of each measurement response apparatus, so that the measurement response apparatus flexibly switches between an apparatus that sends the measurement message and an apparatus that receives the measurement message. In this flexible identity update manner, one measurement template can be repeatedly used for a plurality of times with different seed sequences. The measurement initiation apparatus can measure, with only a few measurement templates, links between the plurality of measurement response apparatuses. This reduces time for configuring the measurement template and reduces storage space required by the measurement template in the measurement initiation apparatus and the measurement response apparatus.

Step 305: The first measurement response apparatus sends the first measurement message based on the first measurement template.

Before step 305, at least one measurement template may be preconfigured or predefined in the first measurement response apparatus. Alternatively, the measurement initiation apparatus may send at least one measurement template to the first measurement response apparatus.

In an implementation, if determining that an apparatus identifier of the first measurement response apparatus is the first apparatus identifier in the first measurement template, the first measurement response apparatus may send the first measurement message based on the first measurement template. The first measurement message may be an NDP, and the first measurement message may include information such as the apparatus identifier of the first measurement response apparatus.

In an implementation, if the first trigger request message further includes the first seed sequence, the first measurement response apparatus performs the preset hash function operation based on the first seed sequence and the apparatus identifier of the first measurement response apparatus, to obtain an updated apparatus identifier. If the updated apparatus identifier is the first apparatus identifier in the first measurement template, the first measurement response apparatus sends the first measurement message based on the first measurement template.

The first measurement response apparatus may send the first measurement message based on the first information that is in the first measurement template and that corresponds to the first measurement response apparatus. For example, the first measurement response apparatus sends the first measurement message at the transmit power indicated by the power control information. If the multiplexing type information in the first measurement template indicates to send the first measurement message in the frequency division multiplexing manner, the first measurement response apparatus may further determine information such as the frequency spacing and the frequency offset of the first measurement message based on the spacing information. If the multiplexing type information in the first measurement template indicates to send the first measurement message in the time division multiplexing manner, the first measurement response apparatus may further determine the HE-LTF offset of the first measurement message based on the HE-LTF offset information.

In an implementation, when the first trigger request message further includes the first indication information, the first measurement response apparatus may determine, based on the first indication information, the apparatus that does not participate in measurement in the at least one first measurement response apparatus and the at least one second measurement response apparatus. The first measurement response apparatus may determine a quantity of second measurement response apparatuses that actually participate in measurement, and select, based on the quantity, an appropriate sending manner and transmit power to send the first measurement efficiency. This improves measurement efficiency.

Step 306: The second measurement response apparatus receives the first measurement message based on the first measurement template.

Before step 306, at least one measurement template may be preconfigured or predefined in the second measurement response apparatus. Alternatively, the measurement initiation apparatus may send at least one measurement template to the second measurement response apparatus.

In an implementation, if determining that an apparatus identifier of the second measurement response apparatus is the second apparatus identifier in the first measurement template, the second measurement response apparatus may receive the first measurement message based on the first measurement template.

In an implementation, if the first trigger request message further includes the first seed sequence, the second measurement response apparatus performs the preset hash function operation based on the first seed sequence and the apparatus identifier of the second measurement response apparatus, to obtain an updated apparatus identifier. If the updated apparatus identifier is the second apparatus identifier in the first measurement template, the second measurement response apparatus receives the first measurement message based on the first measurement template.

The second measurement response apparatus may receive and measure, based on the sender indication information in the first measurement template, the first measurement message sent by the first measurement response apparatus indicated by the sender indication information or the first measurement messages sent by the plurality of first measurement response apparatuses indicated by the sender indication information. For example, if the first measurement template indicates the measurement response apparatus B and the measurement response apparatus C to send the first measurement messages, but the sender indication information in the second information corresponding to the second measurement response apparatus indicates the measurement response apparatus C, the second measurement response apparatus only needs to receive and measure the first measurement message from the measurement response apparatus C, and ignore the first measurement message from the measurement response apparatus B.

In an implementation, when the first trigger request message further includes the first indication information, the second measurement response apparatus may determine, based on the first indication information, the apparatus that does not participate in measurement in the at least one first measurement response apparatus and the at least one second measurement response apparatus. The second measurement response apparatus may determine a quantity of first measurement response apparatuses that actually participate in measurement, and adjust, based on the quantity, a process of receiving and decoding the first measurement message, so that the first measurement message can be correctly decoded and measured when some first measurement response apparatuses are missing. Further, for the first measurement response apparatuses that participate in measurement, the second measurement response apparatus does not need to measure the first measurement messages from the first measurement response apparatuses. This reduces measurement and measurement result feedback overheads.

Optionally, step 307: The measurement initiation apparatus sends a first report request (report polling) message, where the first report request message indicates to report a measurement report.

Correspondingly, the second measurement response apparatus receives the first report request message.

Optionally, step 308: The second measurement response apparatus sends a first measurement report, where the first measurement report includes a measurement result of the first measurement message.

Correspondingly, the measurement initiation apparatus receives the first measurement report. The measurement initiation apparatus may receive at least one first measurement report, and each first measurement report is from one second measurement response apparatus.

The measurement result is determined by the second measurement response apparatus based on the first measurement message, and the measurement result may include information such as CSI. This is not limited in this application.

According to the method provided in this application, in a measurement process, the measurement initiation apparatus indicates, by using a measurement template, how a plurality of measurement response apparatuses receive and send a measurement message, to simultaneously indicate, only transmitting a small amount of information about the measurement template in the measurement process, the plurality of measurement response apparatuses to complete measurement of channel information of a large quantity of links. This can reduce a quantity of signaling transmissions in measurement, reduce occupation of wireless channel resources in a sensing measurement process, reduce measurement overheads, and improve measurement efficiency.

For example, with reference to the foregoing procedure, the following describes the measurement process by using a specific example.

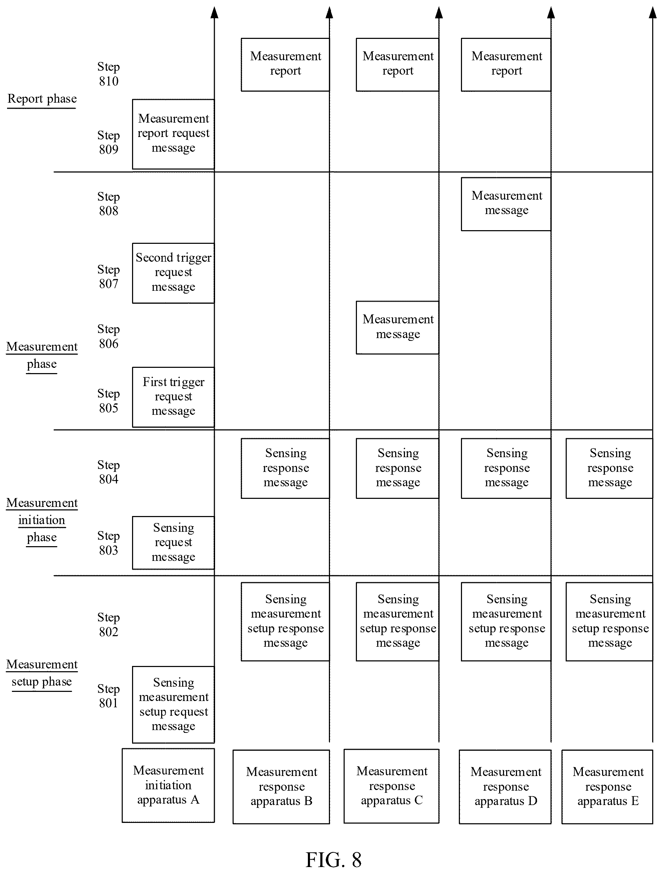

FIG. 8 is a schematic flowchart of a measurement method according to an embodiment of this application. Four measurement response apparatuses are used for description in the procedure. For a case in which there are another quantity of measurement response apparatuses, the same may be deduced by analogy. Details are not described again. The method includes the following steps.

In this procedure, a measurement initiation apparatus A needs to obtain measurement information of six links between the four measurement response apparatuses. At least two rounds of measurement interaction are required, that is, at least two trigger request messages need to be sent.

Step 801: The measurement initiation apparatus A sends a sensing measurement setup request (sensing measurement setup request) message.

The sensing measurement setup request message may include an apparatus identifier allocated to each measurement response apparatus, for example, as shown in Table 2.

Table 2

|  | AID | Apparatus identifier |
|---|---|---|
| Measurement response apparatus B | AID1 | 00 |
| Measurement response apparatus C | AID2 | 01 |
| Measurement response apparatus D | AID3 | 10 |
| Measurement response apparatus E | AID4 | 11 |

With reference to Table 2, the sensing request message includes a correspondence between the AID and the apparatus identifier. Assuming that an AID of the measurement response apparatus B is the AID1, and if receiving the sensing request message, the measurement response apparatus B may determine, based on the correspondence, that an apparatus identifier of the measurement response apparatus B is 00. Likewise, the measurement response apparatus C to the measurement response apparatus E may also determine, respectively, apparatus identifiers allocated by the measurement initiation apparatus to the measurement response apparatus C to the measurement response apparatus E.

The sensing measurement setup request message may further include at least one measurement template, for example, include a first measurement template, a second measurement template, and the like.

In a subsequent measurement process, the measurement initiation apparatus only needs to indicate a template identifier of a measurement template, and a measurement response apparatus can determine, from the at least one measurement template based on the template identifier, a measurement template to be actually executed. This reduces signaling overheads in the measurement process.

Step 802: The measurement response apparatus B to the measurement response apparatus E each send a sensing measurement setup response (sensing measurement setup response) message.

Step 801 and step 802 may belong to a procedure in a measurement setup phase.

After step 801 and step 802, the measurement initiation apparatus A may immediately initiate measurement, or may initiate measurement after waiting for a period of time. This is not limited in this application.

Step 803: The measurement initiation apparatus A sends a sensing request message.

The sensing request message may wake up a measurement response apparatus that needs to participate in measurement.

Step 803 and step 804 may belong to a procedure in a measurement initiation phase.

Step 804: The measurement response apparatus B to the measurement response apparatus D each send a sensing response message.

The sensing response message may also be a CTS-to-self message.

Assuming that the measurement response apparatus E cannot receive the sensing request message due to a fault or an offline state, and does not participate in measurement, the measurement response apparatus E does not send the sensing response message.

Step 805: The measurement initiation apparatus A sends a first trigger request message, where the first trigger request message includes a first template identifier of the first measurement template.

For example, the first template identifier is 15. It is assumed that the measurement template whose template identifier is 15 indicates that apparatus identifiers of first measurement response apparatuses that send measurement messages are 01 and 11, and apparatus identifiers of second measurement response apparatuses that receive the measurement messages are 00 and 10.

The measurement template whose template identifier is 15 may further include two pieces of first information. One piece of first information indicates the first measurement response apparatus whose apparatus identifier is 01 to send the measurement message at a first transmit power, and the other piece of first information indicates the first measurement response apparatus whose apparatus identifier is 11 to send the measurement message at a second transmit power.

The measurement template whose template identifier is 15 may further include two pieces of second information. One piece of second information indicates the second measurement response apparatus whose apparatus identifier is 00 to receive and measure the measurement messages from the first measurement response apparatuses whose apparatus identifiers are 01 and 11, and the other piece of second information indicates the second measurement response apparatus whose apparatus identifier is 11 to receive and measure the measurement messages from the first measurement response apparatuses whose apparatus identifiers are 01 and 11.

The measurement template whose template identifier is 15 may further include other information. For details, refer to the foregoing descriptions about the measurement template. Details are not described herein again.

The first trigger request message further includes first indication information. The first indication information in this step indicates the measurement response apparatus E not to participate in measurement, and/or only the measurement response apparatus B, the measurement response apparatus C, and the measurement response apparatus D to participate in measurement.

Step 806: The measurement response apparatus C sends the measurement message based on the first measurement template.

The measurement response apparatus C may send the measurement message at the first transmit power.

Correspondingly, the measurement response apparatus B and the measurement response apparatus D receive and measure the measurement message from the measurement response apparatus C.

The measurement response apparatus E does not participate in measurement, and therefore the measurement response apparatus B and the measurement response apparatus D do not receive or measure the measurement message from the measurement response apparatus E.

When a plurality of measurement response apparatuses all send measurement messages, a header power of the measurement messages is a sum of powers for all the measurement response apparatuses. However, subsequent measurement symbols, such as HE-LTF symbols, may be in a time division multiplexing manner, and some apparatuses do not transmit measurement messages in specific symbols. In this case, the measurement response apparatus that sends the measurement message may adjust a transmit power for a single symbol based on a specific multiplexing manner (indicated in the measurement template), to keep powers of all symbols in the measurement message basically consistent. For example, if the measurement template indicates to send the measurement message in a spatial division multiplexing manner, the measurement response apparatus B and the measurement response apparatus D may set a symbol corresponding to the measurement response apparatus E that does not participate in measurement to zero, and then decode the measurement message from another measurement response apparatus.

Step 807: The measurement initiation apparatus A sends a second trigger request message, where the second trigger request message includes a second template identifier of the second measurement template.

Because the first trigger request message carries the first indication information, the second trigger request message may not carry the first indication information.

For example, the second template identifier is 16. It is assumed that the measurement template whose template identifier is 16 indicates that apparatus identifiers of first measurement response apparatuses that send measurement messages are 10 and 11, and apparatus identifiers of second measurement response apparatuses that receive the measurement messages are 00 and 01.

The measurement template whose template identifier is 16 may further include two pieces of second information. One piece of second information indicates the second measurement response apparatus whose apparatus identifier is 00 to receive and measure the measurement messages from the first measurement response apparatuses whose apparatus identifiers are 10 and 11, and the other piece of second information indicates the second measurement response apparatus whose apparatus identifier is 01 to receive and measure the measurement messages from the first measurement response apparatuses whose apparatus identifiers are 10 and 11.

The measurement template whose template identifier is 16 may further include other information. For details, refer to the foregoing descriptions about the measurement template. Details are not described herein again.

Step 808: The measurement response apparatus D sends the measurement message based on the first measurement template.

Correspondingly, the measurement response apparatus B and the measurement response apparatus C receive and measure the measurement message from the measurement response apparatus D.

The measurement response apparatus E does not participate in measurement, and therefore the measurement response apparatus B and the measurement response apparatus C do not receive or measure the measurement message from the measurement response apparatus E.

Step 805 to step 808 may belong to a procedure in a measurement phase.

Step 809: The measurement initiation apparatus sends a report request message, where the report request message indicates to report a measurement report.

Step 810: The measurement response apparatus B, the measurement response apparatus C, and the measurement response apparatus D each send a measurement report.

The measurement report sent by each measurement response apparatus includes a measurement result determined by the measurement response apparatus based on the measurement message.

Because participating measurement response apparatuses can determine that the measurement response apparatus E does not participate in measurement, all measurement results related to the measurement response apparatus E do not need to be fed back.

Step 809 and step 810 may belong to a procedure in a report phase.

In this application, the procedure phases in the measurement process are independent of each other. After one procedure ends, the next procedure does not need to be started immediately. For example, after completing the measurement setup phase, the measurement initiation apparatus may determine, based on an actual situation, whether to perform the measurement initiation procedure. In the entire measurement procedure, some procedures may be performed once, and some procedures may be performed a plurality of times. For example, after the measurement initiation apparatus completes a configuration of the measurement template in the measurement setup phase, if the measurement template does not need to be updated, the measurement initiation apparatus may not need to repeatedly perform the steps in the measurement setup phase in the subsequent measurement process.

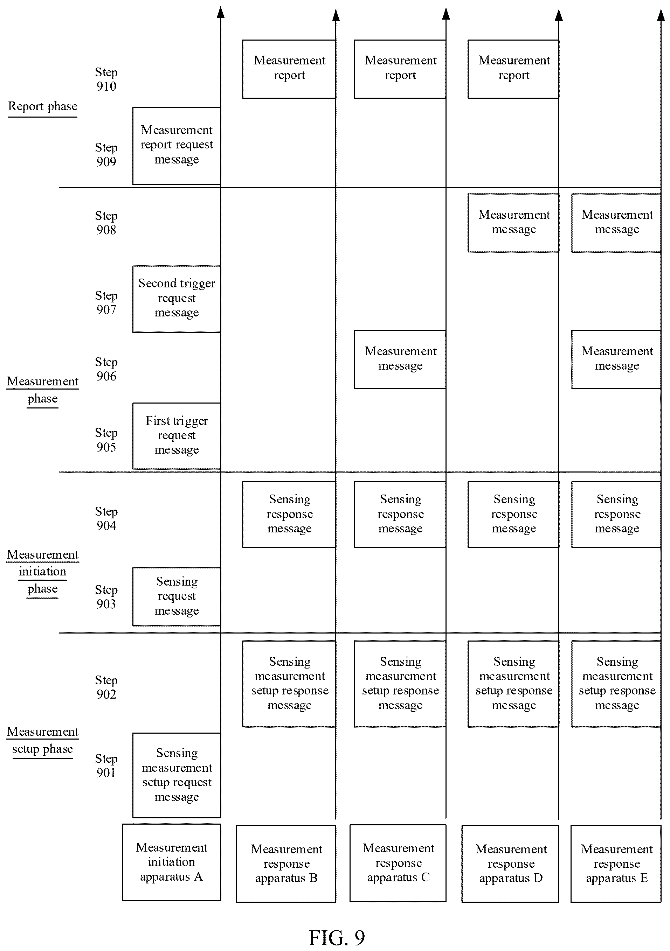

FIG. 9 is a schematic flowchart of a measurement method according to an embodiment of this application. Four measurement response apparatuses are used for description in the procedure. For a case in which there are another quantity of measurement response apparatuses, the same may be deduced by analogy. Details are not described again. The method includes the following steps.

In this procedure, a measurement initiation apparatus A needs to obtain measurement information of six links between the four measurement response apparatuses. At least two rounds of measurement interaction are required, that is, at least two trigger request messages need to be sent.

Step 901: The measurement initiation apparatus A sends a sensing measurement setup request message.

The sensing measurement setup request message may include an apparatus identifier allocated to each measurement response apparatus. For example, refer to Table 2 shown above.

The sensing measurement setup request message may further include at least one measurement template, for example, include a first measurement template, and the like.

Step 902: A measurement response apparatus B to a measurement response apparatus E each send a sensing measurement setup response message.

After step 901 and step 902, the measurement initiation apparatus A may immediately initiate measurement, or may initiate measurement after waiting for a period of time. This is not limited in this application.

Step 903: The measurement initiation apparatus A sends a sensing request message.

The sensing request message may include the apparatus identifier allocated to each measurement response apparatus. For details, refer to Table 2 shown above.

It is assumed that all the measurement response apparatuses participate in measurement in this measurement process.

Step 904: The measurement response apparatus B to the measurement response apparatus E each send a sensing response message.

Step 905: The measurement initiation apparatus A sends a first trigger request message, where the first trigger request message includes a first template identifier of the first measurement template.

It is assumed that the first template identifier is 3234, the first measurement template indicates that apparatus identifiers of first measurement response apparatuses that send measurement messages are 01 and 10, and apparatus identifiers of second measurement response apparatuses that receive the measurement messages are 00 and 11.

The measurement template whose template identifier is 16 may further include two pieces of second information. One piece of second information indicates the second measurement response apparatus whose apparatus identifier is 00 to receive and measure the measurement messages from the first measurement response apparatuses whose apparatus identifiers are 01 and 10, and the other piece of second information indicates the second measurement response apparatus whose apparatus identifier is 11 to receive and measure the measurement messages from the first measurement response apparatuses whose apparatus identifiers are 01 and 10.

The measurement template may further include other information. Details are not described herein.

The first trigger request message further includes a first seed sequence. It is assumed that an updated apparatus identifier obtained by performing a preset hash operation on the first seed sequence and each apparatus identifier is shown in Table 3.

Table 3

|  | Apparatus identifier | Updated apparatus identifier obtained by performing the operation with the first seed sequence |
|---|---|---|
| Measurement response apparatus B | 00 | 00 |
| Measurement response apparatus C | 01 | 01 |
| Measurement response apparatus D | 10 | 10 |
| Measurement response apparatus E | 11 | 11 |

In Table 3, the updated apparatus identifier obtained by performing the operation on the apparatus identifier 00 of the measurement response apparatus B and the first seed sequence is 00. Likewise, the updated apparatus identifier obtained by the measurement response apparatus C is 01, the updated apparatus identifier obtained by the measurement response apparatus D is 10, and the updated apparatus identifier obtained by the measurement response apparatus E is 11.

The measurement response apparatus B, the measurement response apparatus C, the measurement response apparatus D, and the measurement response apparatus E perform the following step 906 based on the first measurement template.

Step 906: The measurement response apparatus C and the measurement response apparatus D each send the measurement message based on the first measurement template.

Correspondingly, the measurement response apparatus B and the measurement response apparatus E measure the measurement message from the measurement response apparatus C and the measurement message from the measurement response apparatus D respectively.

Step 907: The measurement initiation apparatus A sends a second trigger request message, where the second trigger request message includes the first template identifier of the first measurement template.

It is assumed that the first template identifier is still 3234, and the second trigger request message further includes a second seed sequence. It is assumed that an updated apparatus identifier obtained by performing the preset hash operation on the second seed sequence and each apparatus identifier is shown in Table 4.

Table 4

|  | Apparatus identifier | Updated apparatus identifier obtained by performing the operation with the first seed sequence |
|---|---|---|
| Measurement response apparatus B | 00 | 00 |
| Measurement response apparatus C | 01 | 10 |
| Measurement response apparatus D | 10 | 01 |
| Measurement response apparatus E | 11 | 11 |

In Table 4, the updated apparatus identifier obtained by the measurement response apparatus B is 00, the updated apparatus identifier obtained by the measurement response apparatus C is 10, the updated apparatus identifier obtained by the measurement response apparatus D is 01, and the updated apparatus identifier obtained by the measurement response apparatus E is 11.

The measurement response apparatus B, the measurement response apparatus C, the measurement response apparatus D, and the measurement response apparatus E perform the following step 908 based on the first measurement template.

Step 908: The measurement response apparatus D and the measurement response apparatus E each send the measurement message based on the first measurement template.

Correspondingly, the measurement response apparatus B and the measurement response apparatus C measure the measurement message from the measurement response apparatus D and the measurement message from the measurement response apparatus E respectively.

Step 909: The measurement initiation apparatus A sends a report request message, where the report request message indicates to report a measurement report.

Step 910: The measurement response apparatus B, the measurement response apparatus C, and the measurement response apparatus D each send a measurement report.

The measurement report sent by each measurement response apparatus includes a measurement result determined by the measurement response apparatus based on the measurement message.

It can be learned from the foregoing process that the measurement initiation apparatus can reuse a same measurement template to perform measurement a plurality of times. This can reduce overheads of configuring and storing the measurement template.

In this embodiment of this application, the measurement template may be generated by the measurement initiation apparatus and configured in the measurement response apparatus. How the measurement initiation apparatus specifically generates the measurement template is not limited in this application.

For example, it is assumed that there are n measurement response apparatuses, and there are a total of n(n-1)/2 links between the measurement response apparatuses. In this application, a plurality of measurement response apparatuses are allowed to simultaneously send measurement messages in a spatial division multiplexing manner, a time division multiplexing manner, or a frequency division multiplexing manner, and a plurality of links can be measured once. For example, when one measurement response apparatus sends a measurement message, and k measurement response apparatuses all receive and measure the measurement message, $l \times k$ links can be simultaneously measured once. In this case, all links to be measured can be quickly covered.

That n(n-1)/2 links are included between the n measurement response apparatuses is considered. Because a wireless channel has reciprocity, for a link connecting two measurement response apparatuses, only one direction needs to be measured. That is, either of the two apparatuses sends a measurement message, and the other apparatus receives the measurement message, to obtain information about the link. In this case, because it is allowed in this application that a plurality of measurement response apparatuses send measurement messages and a plurality of measurement response apparatuses receive the measurement messages, the n(n-1)/2 links can be measured through only $\lceil \log_2 n \rceil$ measurement interactions. Each measurement interaction uses one measurement template. A maximum of $\lceil \log_2 n \rceil$ measurement templates are required. In addition, if a measurement template is reused by using a seed sequence, a quantity of measurement templates may be less than $\lceil \log_2 n \rceil$.

For example, if there are 16 measurement response apparatuses, configured apparatus identifiers are 0000, 0001, 0010, ..., and 1111. In this case, the links between all the measurement response apparatuses can be measured through $\lceil \log_2 n \rceil = 4$ measurement interactions. Specifically, in a first measurement interaction, a measurement template 1 needs to be used. The measurement template 1 indicates an apparatus whose apparatus identifier has a least significant bit 1, for example, the apparatus whose apparatus identifier is 0001, 0011, or the like, to send a measurement message. The measurement template 1 further indicates an apparatus whose apparatus identifier has a least significant bit 0 to receive the measurement message. In this case, n/2=8 devices perform sending, and the other n/2=8 devices perform receiving. A total of $n^2/4=64$ links can be measured. In a second measurement interaction, a measurement template 2 needs to be used. The measurement template 2 indicates an apparatus whose apparatus identifier has a second least significant bit 1 to send a measurement message, and an apparatus whose apparatus identifier has a second least significant bit 0 to receive the measurement message. The same may be deduced by analogy. After the four measurement interactions are performed and four measurement templates are used, it can be determined that n(n-1)/2=56 links between the 16 measurement response apparatuses have been measured at least once. In the foregoing process, channel reciprocity is considered. If channel reciprocity is not considered, both directions of one link need to be measured, and a quantity of measurement interactions is $2\lceil \log_2 n \rceil$.

It can be learned from the foregoing process that, in this application, all the plurality of measurement response apparatuses send and/or receive the measurement messages, so that the quantity of measurement interactions for measuring all the links can be reduced from O(n) level to O($\log_2 n$) level. Therefore, when there are a large quantity of measurement response apparatuses, the solution provided in this application can greatly reduce the quantity of interactions for measurement, improve measurement efficiency, and reduce resources occupied by measurement.

In another implementation, when links between all the measurement response apparatuses do not need to be measured, the measurement initiation apparatus may perform measurement planning based on an actual situation of links to be measured.

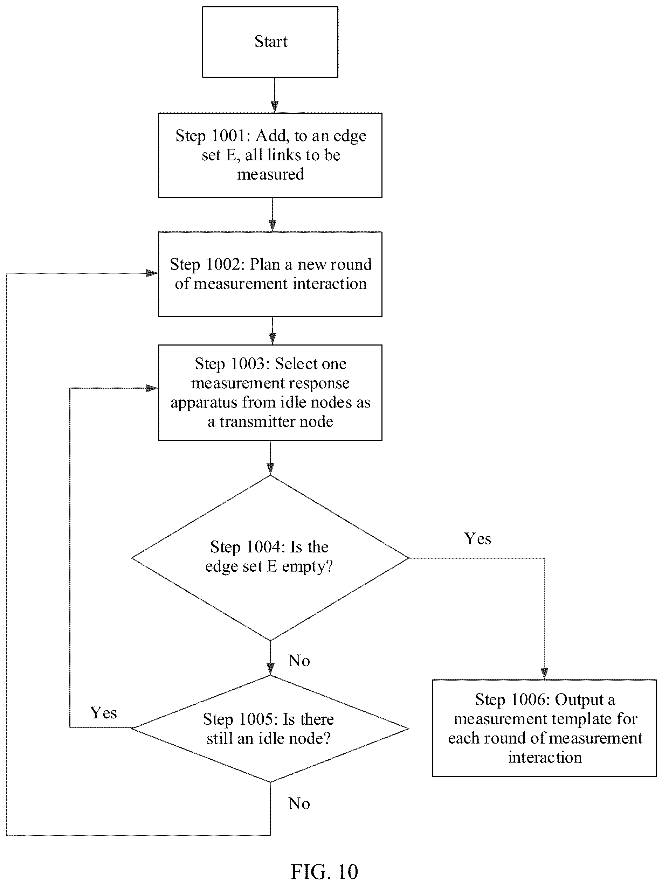

For example, FIG. 10 is a schematic flowchart of measurement planning according to an embodiment of this application. In this application, it is assumed in a greedy algorithm of measurement planning that links to be measured form an edge set E of an undirected graph between nodes. Specific steps are as follows.

Step 1001: A measurement initiation apparatus adds, to the edge set E, all the links to be measured.

Step 1002: The measurement initiation apparatus plans a new round of measurement interaction, and sets all measurement response apparatuses to an idle state.

Step 1003: The measurement initiation apparatus selects one measurement response apparatus from idle nodes (measurement response apparatuses that are neither in a transmit state nor in a receive state) as a transmitter node.

The transmitter node is a node that sends a measurement message, and a receiver node is a node that receives a measurement message. A selection condition may be selecting a measurement response apparatus with a maximum degree in the existing edge set E. Herein, the "maximum degree" means a maximum quantity of edges whose endpoints are the node and whose other endpoints are not in the transmit state. The measurement initiation apparatus selects a multiplexing, time division multiplexing, or frequency division multiplexing transmit slot for the node. In addition, the measurement initiation apparatus sets the transmitter node to the transmit state, removes, from the edge set E, edges whose endpoints are the transmitter node and whose other endpoints are not in the transmit state, and sets the other endpoints of the edges to the receive state.

Under a condition that there is a power control requirement, when the measurement initiation apparatus selects one node to send the measurement message, the measurement initiation apparatus needs to consider not only a quantity of edges adjacent to the transmitter node, but also a power for the transmitter node, and needs to select the appropriate transmitter node when a maximum quantity of links to be measured can be effectively measured under a given transmit power (indicated by a measurement template). In addition, if another node has been arranged to send the measurement message in this measurement interaction, a transmit power that may cause potential interference to a measurement link of the another node needs to be excluded. A specific process is not limited in this application. Details are not described herein.

Step 1004: After completing selection of the transmitter node, the measurement initiation apparatus determines whether an updated edge set E is empty. If the edge set E is empty, it indicates that all the links to be measured are covered. In this case, step 1006 is performed to output a result. If the edge set E is not empty, the measurement initiation apparatus continues to perform measurement planning, and performs step 1005.

Step 1005: The measurement initiation apparatus determines whether there is still an idle node, and whether a measurement message can still be sent in a spatial division multiplexing, time division multiplexing, or frequency division multiplexing manner. If there is still the idle node and a wireless channel resource, step 1003 is performed, and a transmitter node is added to the current measurement interaction. If there is no idle node, step 1002 is performed.

Step 1006: The measurement initiation apparatus completes measurement planning for all the links, and outputs a measurement template of each round of measurement interaction in one or more rounds of measurement interaction. Each measurement template indicates which measurement response apparatuses need to send the measurement messages and which measurement response apparatuses need to receive and measure the measurement messages in the current measurement interaction.

Certainly, when the set E of the links that need to be measured is given, the measurement initiation apparatus may further complete measurement planning by using another algorithm. This is not limited in this application.

In this application, the measurement template includes power control information, and the power control information indicates the transmit power used by the measurement response apparatus to send the measurement message. When a wireless channel is good, the transmit power indicated by the power control information may be a preset power. For example, the preset power is -60 decibel-milliwatts (dBm).

When a radio environment is complex, channel attenuation of links between different measurement response apparatuses may be inconsistent. In this case, the measurement initiation apparatus needs to coordinate the transmit power for the measurement message, so that measurement messages sent by the different measurement response apparatuses do not cause severe interference at a receiving end, thereby avoiding a case in which measurement cannot be performed.

In this application, the measurement template includes the power control information indicating that after receiving a trigger request message, the measurement response apparatus should determine, based on a signal strength of the received trigger request message, a power required by the measurement response apparatus for sending, so that the power indicated by the power control information is reached at the measurement initiation apparatus. In this application, a unit of the power indicated by the power control information may be dBm. The power control information may indicate the power by using binary coding. For example, the power control information being 0 indicates that the power is -110 dBm, and the power control information being 90 indicates that the power is -20 dBm. Certainly, there may be a plurality of methods for specifically indicating the transmit power by using the power control information. For example, the power control information may indicate an adjustment value between a current transmit power and a transmit power used last time, that is, notify to increase a transmit power by a specific value or decrease a transmit power by a specific value. Alternatively, an absolute power indication may be used. To be specific, the power control information indicates an absolute transmit power, that is, directly indicates a value of the transmit power. How the power control information specifically indicates the transmit power may be flexibly adjusted according to a specific requirement in actual implementation.

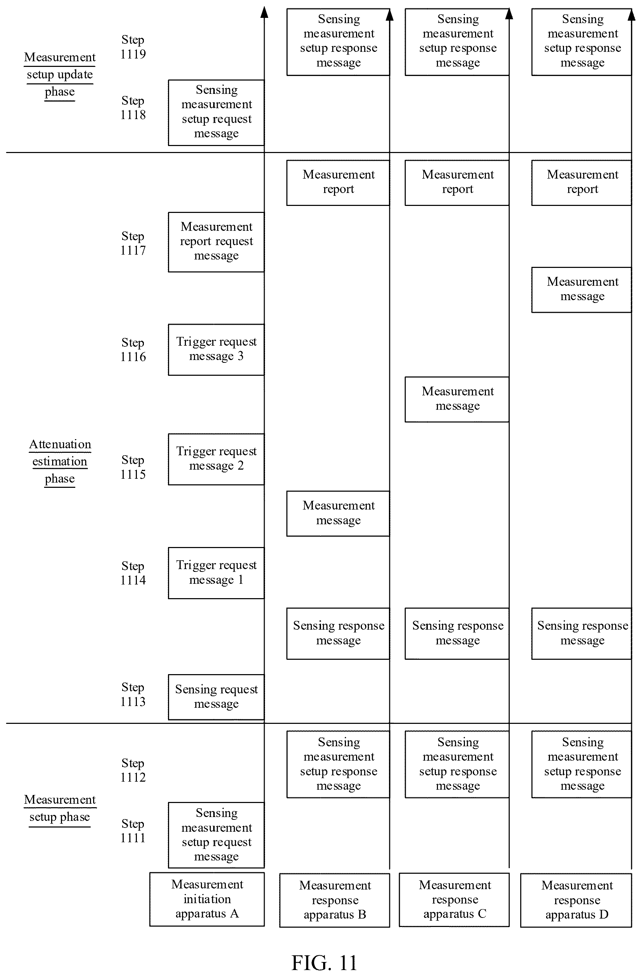

In this application, the attenuation of the links between the measurement response apparatuses may be predetermined, so that the power indicated by the power control information can overcome impact of the channel attenuation of the links. A specific measurement power control and link attenuation estimation procedure is shown in FIG. 11. The basic procedure includes three phases: a pre-measurement setup phase, an attenuation estimation phase, and a measurement setup update phase.

FIG. 11 is a schematic flowchart of a measurement method according to an embodiment of this application. Three measurement response apparatuses are used for description in the procedure. For a case in which there are another quantity of measurement response apparatuses, the same may be deduced by analogy. Details are not described again.

In this procedure, a measurement initiation apparatus A needs to estimate link channel attenuation of six links between the three measurement response apparatuses. Specific steps are as follows:

Step 1111: The measurement initiation apparatus A sends a sensing measurement setup request message in the pre-measurement setup phase.

The measurement setup request message includes measurement templates for estimating attenuation of links between a measurement response apparatus B to a measurement response apparatus D. A transmit power that is indicated in each measurement template and that is for sending a measurement message is a preset power P, for example, P=-60 dBm.

Step 1112: All measurement response apparatuses that participate in measurement feed back a measurement setup response message.

The pre-measurement setup phase is completed through the foregoing steps. Steps in the attenuation estimation phase are performed below.

Step 1113: The measurement initiation apparatus A sends a sensing request message, to wake up all the measurement response apparatuses.

All the measurement response apparatuses that participate in measurement reply a sensing response message, to indicate that the measurement response apparatuses participate in measurement. In this embodiment of this application, an example in which the measurement response apparatus B to the measurement response apparatus D all participate in measurement is used for description.

Step 1114: The measurement initiation apparatus A sends a trigger request message 1.

The trigger request message 1 includes a template identifier 1. It is assumed that the template identifier 1 corresponds to a measurement template 1, and the measurement template 1 indicates the measurement response apparatus B to send a measurement message, and other measurement response apparatuses to receive and measure the measurement message.

Correspondingly, the measurement response apparatus B sends the measurement message based on the measurement template 1. The measurement response apparatus B sends the measurement message at the preset power P based on the power control information in the measurement template 1.

The measurement initiation apparatus A, the measurement response apparatus C, and the measurement response apparatus D measure the measurement message, and record measurement results.

Step 1115: The measurement initiation apparatus A sends a trigger request message 2.

The trigger request message 2 includes a template identifier 2. It is assumed that the template identifier 2 corresponds to a measurement template 2, and the measurement template 2 indicates the measurement response apparatus C to send a measurement message, and other measurement response apparatuses to receive and measure the measurement message.

Correspondingly, the measurement response apparatus C sends the measurement message based on the measurement template 1. The measurement response apparatus C sends the measurement message at the preset power P based on the power control information in the measurement template 2.

The measurement initiation apparatus A, the measurement response apparatus B, and the measurement response apparatus D measure the measurement message, and record measurement results.

Step 1116: The measurement initiation apparatus A sends a trigger request message 3.

The trigger request message 3 includes a template identifier 3. It is assumed that the template identifier 3 corresponds to a measurement template 3, and the measurement template 3 indicates the measurement response apparatus D to send a measurement message, and other measurement response apparatuses to receive and measure the measurement message.

Correspondingly, the measurement response apparatus D sends the measurement message based on the measurement template 3. The measurement response apparatus D sends the measurement message at the preset power P based on the transmit power indicated by the power control information in the measurement template 3.

The measurement initiation apparatus A, the measurement response apparatus B, and the measurement response apparatus C measure the measurement message, and obtain measurement results.

Step 1117: The measurement initiation apparatus sends a report request message, to notify the measurement response apparatuses to feed back the measurement results.

Correspondingly, the measurement initiation apparatus B, the measurement response apparatus C, and the measurement response apparatus D feed back the measurement results obtained in the measurement process to the measurement initiation apparatus A by using measurement report (measurement report) messages. The measurement initiation apparatus receives the measurement report messages, and records the related measurement results.

Step 1113 to step 1117 belong to a procedure of the attenuation estimation phase.

The measurement initiation apparatus estimates the channel attenuation between measurement response apparatuses based on the measurement result fed back by each measurement response apparatus, and updates the power control information, in the measurement template, used when each first measurement response apparatus sends the measurement message. The measurement initiation apparatus may send new measurement templates to all the measurement response apparatuses by using measurement setup messages.

Step 1118: The measurement initiation apparatus A sends a sensing measurement setup request message.

The measurement setup request message includes the updated measurement templates.

Step 1119: Each measurement response apparatus feeds back a measurement setup response message.

Step 1118 and step 1119 belong to a procedure of the measurement setup update phase.

In this application, in the pre-measurement phase and the attenuation estimation phase, the measurement initiation apparatus may set the transmit power P to a fixed value, for example, P=-60 dBm, to obtain receive power information between every two of the measurement response apparatuses under the condition. The information is included in the measurement results in step 1117. In this way, the measurement initiation apparatus can obtain a measurement power matrix Q, where an element $Q_{ij}$ in the measurement power matrix Q is an actual power for a measurement message sent by an $i^{th}$ node and the measurement message received by a $j^{th}$ node.

For example, the measurement power matrix Q established in the procedure shown in FIG. 11 may be shown in Table 5.

Table 5

|  | Measurement initiation apparatus A | Measurement response apparatus B | Measurement response apparatus C | Measurement response apparatus D |
|---|---|---|---|---|
| Measurement initiation apparatus A | / | $Q_{01}$ | $Q_{02}$ | $Q_{03}$ |
| Measurement response apparatus B | $Q_{10}$ | / | $Q_{10}$ | $Q_{13}$ |
| Measurement response apparatus C | $Q_{20}$ | $Q_{21}$ | / | $Q_{23}$ |
| Measurement response apparatus D | $Q_{30}$ | $Q_{21}$ | $Q_{32}$ | / |

In Table 5, $Q_{01}$ indicates a receive power for a measurement message received by the measurement initiation apparatus B from the measurement response apparatus A, $Q_{02}$ indicates a receive power for a measurement message received by the measurement initiation apparatus C from the measurement response apparatus A, and $Q_{03}$ indicates a receive power for a measurement message received by the measurement initiation apparatus D from the measurement response apparatus A. Other cases are deduced by analogy. Details are not described again.

Based on the measurement result reported by each measurement response apparatus, if the measurement initiation apparatus increases the transmit power for the $i^{th}$ node by 3 dBm, the transmit power is set to -57 dBm. Under the condition that a channel remains unchanged, the actual power received by the $j^{th}$ node also increases by 3 dBm. Therefore, the measurement initiation apparatus can effectively adjust the actual receive power for the measurement response apparatus based on the measurement power matrix Q. For example, when it is expected that the receive power used when the $i^{th}$ node sends the measurement message, and the $j^{th}$ node receives the measurement message is $T_{ij}$, the measurement initiation apparatus may set the transmit power indicated by the power control information, of the $i^{th}$ node, in the corresponding measurement template to $P+T_{ij}-Q_{ij}$.

When a wireless channel environment changes, the measurement initiation apparatus may also adjust the transmit power. That the wireless channel environment changes usually include that the measurement response apparatus changes, and a channel is completely blocked, or other cases. In this case, channel attenuation changes greatly and lasts a long time. Specifically, the measurement initiation apparatus may determine when to trigger a procedure of adjusting the transmit power. This is not limited in this application.

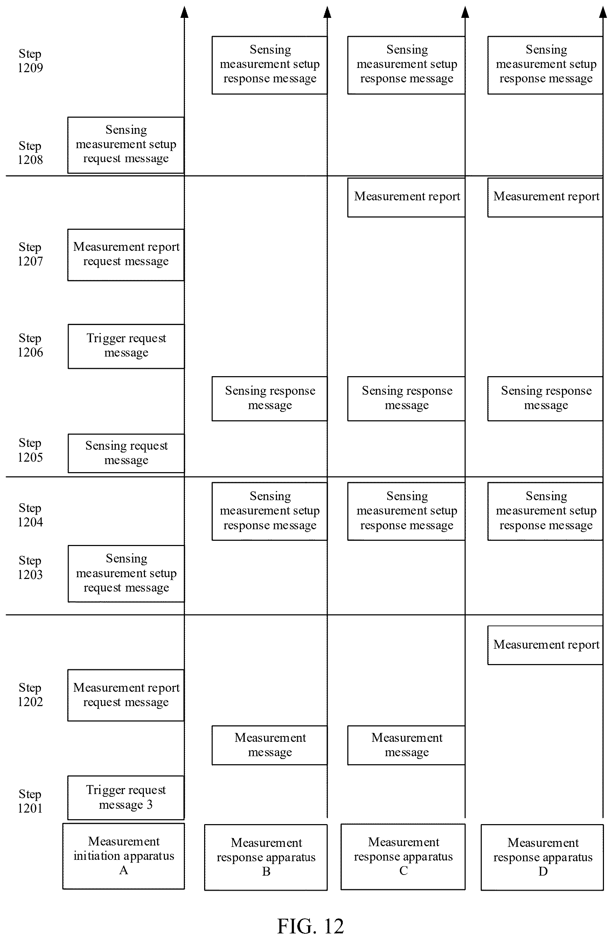

FIG. 12 is a schematic flowchart of a measurement method according to an embodiment of this application. Three measurement response apparatuses are used for description in the procedure. For a case in which there are another quantity of measurement response apparatuses, the same may be deduced by analogy. Details are not described again.

Step 1201: A measurement initiation apparatus A sends a trigger request message.

The trigger request message includes a template identifier of a measurement template 1, and the measurement template 1 indicates a measurement response apparatus B and a measurement response apparatus C each to send a measurement message, and a measurement response apparatus D to measure the measurement messages from the two measurement response apparatuses.

It is assumed that in this process, the measurement response apparatus D finds that the measurement message cannot be normally decoded, for example, the measurement message from the measurement response apparatus B cannot be detected or has very weak correlation, and therefore cannot obtain a valid measurement result.

Step 1202: The measurement initiation apparatus A sends a report request message, to request the measurement response apparatus D to feed back a measurement result.

In this case, the measurement response apparatus D sends a measurement report message including the measurement result. In addition to feeding back, in the measurement report message, the measurement result corresponding to the measurement message from the measurement response apparatus C, the measurement response apparatus D further includes measurement failure indication information in the measurement report message. The measurement failure indication information indicates that measurement of the measurement message from the measurement response apparatus B fails, and indicates a failure cause.

For example, 3 bits of error report segmentation (Error Report Segmentation) may be added to a segmentation control field (Segmentation Control Field) in a sensing measurement report container (Sensing Measurement Report Container) field in the measurement report message, so that the measurement failure indication information is included in the error report segmentation. For example, the 3 bits corresponding to the error report segmentation may correspond to a plurality of error codes, and a correspondence between an error code and a failure cause indicated by the measurement failure indication information may be shown in Table 6.

Table 6

| Error code | Measurement failure indication information |
|---|---|
| 000 | No error (no error) |
| 001 | Decoding error (decoding error) |
| 010 | Power underflow (power underflow) |
| 011 | Power overflow (power overflow) |
| 100 | Interference (interference) |

If the failure cause is the decoding error, a specific decoding error cause may not be indicated, and only the decoding error is indicated (for example, an HE-LTF has no correlation with adjacent subcarriers in frequency domain response). If the failure cause is the power overflow or the power underflow, it indicates that power control fails. If the failure cause is the interference, it indicates that unexpected co-channel interference occurs.

The error code may be encoded in another manner, provided that it only needs to indicate that the measurement response apparatus detects a channel change. The measurement response apparatus may also feed back a receive power estimated in this measurement in a measurement error report, to help the measurement initiation apparatus perform power control.

After receiving the measurement result from the measurement response apparatus D, the measurement initiation apparatus A determines that a transmit power for the measurement response apparatus B needs to be re-estimated, to reduce impact of channel attenuation on measurement. In this case, the measurement initiation apparatus notifies all the measurement response apparatuses of a measurement setup message, where the message carries a measurement template that is used by the measurement response apparatus B to send the measurement message independently and another node to receive and measure the measurement message.

Step 1203: The measurement initiation apparatus A sends the sensing measurement setup message.

The sensing measurement setup message includes the measurement template 2. The measurement template 2 indicates the measurement response apparatus B to send the measurement message independently, and another measurement response apparatus to receive the measurement message. The measurement template 2 further indicates the measurement response apparatus B to send the measurement message at a preset transmit power P.

Step 1204: All the measurement response apparatuses feed back a measurement setup response message, to indicate that the measurement response apparatuses can participate in attenuation estimation.

Step 1205: The measurement initiation apparatus A sends a sensing request message, to wake up all the measurement response apparatuses.

The measurement response apparatus that receives the sensing request message feeds back a sensing response message. In this embodiment, an example in which all the measurement response apparatuses receive the sensing request message is used for description. Other cases are not described.

Step 1206: The measurement initiation apparatus A sends a trigger request message.

The trigger request message includes a template identifier of the measurement template 2.

Correspondingly, the measurement response apparatus B sends the measurement message based on the measurement template 2, and the measurement response apparatus C and the measurement response apparatus D receive and measure the measurement message.

Step 1207: The measurement initiation apparatus A sends a report request message, to request the measurement response apparatuses to feed back measurement results.

Correspondingly, the measurement response apparatus C and the measurement response apparatus D each feed back the measurement result by using a measurement report message, where the measurement result fed back by each measurement response apparatus includes a receive power for receiving the measurement message from the measurement response apparatus B.

After obtaining the measurement results from the measurement response apparatus C and the measurement response apparatus D, the measurement initiation apparatus A determines channel attenuation information from the measurement response apparatus B to the measurement response apparatus C and channel attenuation information from the measurement response apparatus B to the measurement response apparatus D; and the measurement initiation apparatus updates a measurement power matrix, and re-determines measurement templates based on a new measurement power matrix, especially adjusts the transmit power for the measurement response apparatus B. The measurement initiation apparatus A may configure the new measurement templates for all the measurement response apparatuses.

Step 1208: The measurement initiation apparatus A sends a measurement setup message.

The measurement setup message includes at least one of the updated measurement templates.

Step 1209: All the measurement response apparatuses feed back a measurement setup response message.

Step 1203 to step 1207 are optional. The measurement initiation apparatus may determine, based on an actual situation, whether to perform measurement setup and re-measure attenuation to update the measurement templates. The measurement initiation apparatus may also periodically re-measure channel attenuation or select links for which attenuation estimation measurement is to be performed. Particularly, the measurement initiation apparatus may analyze a change trend of channel attenuation based on a historical measurement result, to predict a transmit power required by a given measurement response apparatus and adjust the transmit power accordingly. A specific process is not limited. Details are not described herein.

In step 1208 and step 1209, the measurement initiation apparatus may not need to completely re-establish the established measurement process, but may update the existing measurement templates. For example, the measurement initiation apparatus may indicate a specific measurement response apparatus (for example, the measurement response apparatus B in the foregoing procedure) to increase or decrease a transmit power indicated by power control information in a specified measurement template (for example, the measurement template 1 in the foregoing procedure). A specific increase or decrease value is provided by a relative power adjustment field sent by the measurement initiation apparatus.

The foregoing method procedures in this application may be used in combination or separately. This is not limited in this application.

The foregoing procedures mainly describe the solutions provided in this application from a perspective of interaction between network elements. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

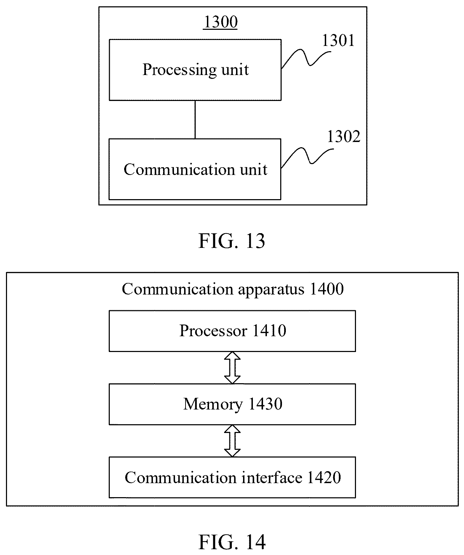

According to the foregoing methods, FIG. 13 is a diagram of a structure of a communication apparatus according to an embodiment of this application. The communication apparatus 1300 may be configured to implement a function of the measurement initiation apparatus or the measurement response apparatus (for example, an AP or a STA) in embodiments of this application. For example, the communication apparatus may be a software module or a chip system. In this embodiment of this application, the chip system may include a chip, or may include a chip and another discrete component. The communication apparatus 1300 may include a processing unit 1301 and a communication unit 1302.

In this embodiment of this application, the communication unit may also be referred to as a transceiver unit, and may include a sending unit and/or a receiving unit respectively configured to perform sending and receiving steps performed by the measurement initiation apparatus or the measurement response apparatus in the foregoing method embodiments. The processing unit may also be referred to as a processor, a processing board, a processing module, a processing apparatus, or the like. The sending unit sometimes may also be referred to as a transceiver machine, a transceiver, a transceiver circuit, or the like. The sending unit sometimes may also be referred to as a transmitter machine, a transmitter, a transmit circuit, or the like. The communication apparatus may further include the receiving unit. The receiving unit sometimes may also be referred to as a receiver machine, a receiver, a receive circuit, or the like. The sending unit and the receiving unit may be one unit integrated together, or may be two independent units.

It should be understood that descriptions of apparatus embodiments correspond to the descriptions of the method embodiments. Therefore, for content that is not described in detail, refer to the method embodiments. For brevity, details are not described herein.

In an implementation, the communication apparatus 1300 may perform the following functions.

The processing unit is configured to determine a first measurement template, where the first measurement template indicates at least one first measurement response apparatus and at least one second measurement response apparatus, the first measurement response apparatus is configured to send a first measurement message, and the second measurement response apparatus is configured to receive the first measurement message.

The communication unit is configured to send a first trigger request message, where the first trigger request message includes a first template identifier of the first measurement template.

In an implementation, the communication apparatus 1300 may perform the following functions.

The processing unit is configured to receive a first trigger request message from a measurement initiation apparatus by using the communication unit, where the first trigger request message includes a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message.

The processing unit is configured to send the first measurement message based on the first measurement template by using the communication unit.

In an implementation, the communication apparatus 1300 may perform the following functions.

The processing unit is configured to receive a first trigger request message from a measurement initiation apparatus by using the communication unit, where the first trigger request message includes a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message.

The processing unit is configured to receive the first measurement message based on the first measurement template by using the communication unit.

The foregoing is merely an example. The processing unit 1301 and the communication unit 1302 may further perform other functions. For more detailed descriptions, refer to the related descriptions in the foregoing method embodiments. Details are not described herein.

FIG. 14 shows a communication apparatus 1400 according to an embodiment of this application. The apparatus shown in FIG. 14 may be an implementation of a hardware circuit of the apparatus shown in FIG. 13. The communication apparatus is applicable to the flowchart shown above, and perform a function of the measurement initiation apparatus or measurement response apparatus in the foregoing method embodiment. For ease of description, FIG. 14 shows only main parts of the communication apparatus.

As shown in FIG. 14, the communication apparatus 1400 includes a processor 1410 and a communication interface 1420. The processor 1410 and the communication interface 1420 are coupled to each other. It may be understood that the communication interface 1420 may be a transceiver or an input/output interface. Optionally, the communication apparatus 1400 may further include a memory 1430, configured to store instructions executed by the processor 1410, store input data for the processor 1410 to run instructions, or store data generated after the processor 1410 runs instructions.

When the communication apparatus 1400 is configured to implement the method shown above, the processor 1410 is configured to implement a function of the processing unit 1301, and the communication interface 1420 is configured to implement a function of the communication unit 1302.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be disposed in a measurement initiation apparatus or measurement response apparatus. Certainly, the processor and the storage medium may alternatively exist in the measurement initiation apparatus or measurement response apparatus as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

**Claims**

1. A measurement method, wherein the method comprises:

    determining, by a measurement initiation apparatus, a first measurement template, wherein the first measurement template indicates at least one first measurement response apparatus and at least one second measurement response apparatus, the first measurement response apparatus is configured to send a first measurement message, and the second measurement response apparatus is configured to receive the first measurement message; and

    sending, by the measurement initiation apparatus, a first trigger request message, wherein the first trigger request message comprises a first template identifier of the first measurement template.

2. The method according to claim 1, wherein the first trigger request message further comprises a first seed sequence; and

    the first seed sequence is used to update an identity of at least one of the at least one first measurement response apparatus and/or the at least one second measurement response apparatus.

3. The method according to claim 2, wherein when the first seed sequence is used to update an identity of one of the at least one first measurement response apparatus, the first measurement response apparatus whose identity is to be updated is updated to an apparatus that receives the first measurement message; and/or

    when the first seed sequence is used to update an identity of one of the at least one second measurement response apparatus, the second measurement response apparatus whose identity is to be updated is updated to an apparatus that sends the first measurement message.

4. The method according to any one of claims 1 to 3, wherein the first measurement template comprises at least one of the following:

    the first template identifier;
    multiplexing type information indicating the at least one first measurement response apparatus to send the first measurement message in at least one of the following manners: time division multiplexing, frequency division multiplexing, and spatial division multiplexing;
    transmitter node quantity information indicating a quantity X of the at least one first measurement response apparatus, wherein X is greater than 0;
    receiver node quantity information indicating a quantity Y of the at least one second measurement response apparatus, wherein Y is greater than 0;
    transmitter node information comprising X pieces of first information, wherein each piece of first information comprises at least one of the following: an apparatus identifier of a first measurement response apparatus; and power control information; and
    receiver node information comprising Y pieces of second information, wherein each piece of second information comprises at least one of the following: an apparatus identifier of a second measurement response apparatus; and sender indication information indicating one or more of the at least one first measurement response apparatus.

5. The method according to claim 4, wherein a length of the apparatus identifier of the first measurement response apparatus is less than a length of an association identifier AID of the first measurement response apparatus or a length of a measurement session association identifier.

6. The method according to claim 4, wherein a length of the apparatus identifier of the second measurement response apparatus is less than a length of an association identifier AID of the second measurement response apparatus or a length of a measurement session association identifier.

7. The method according to any one of claims 1 to 6, wherein the method further comprises:
    sending, by the measurement initiation apparatus, a first sensing measurement setup message, wherein the first sensing measurement setup message comprises at least one of the following:

an apparatus identifier of the at least one first measurement response apparatus and an apparatus identifier of the at least one second measurement response apparatus; and

at least one measurement template, wherein the at least one measurement template comprises the first measurement template.

**8.** The method according to any one of claims 1 to 7, wherein the first trigger request message further comprises first indication information, and when there is an apparatus that does not participate in measurement in the at least one first measurement response apparatus and the at least one second measurement response apparatus, the first indication information indicates a measurement response apparatus that actually sends the first measurement message and/or a measurement response apparatus that actually receives the first measurement message in the at least one first measurement response apparatus and the at least one second measurement response apparatus.

**9.** The method according to claim 8, wherein the method further comprises:
sending, by the measurement initiation apparatus, a first sensing request message, wherein the first sensing request message is used to determine the apparatus that does not participate in measurement in the at least one first measurement response apparatus and the at least one second measurement response apparatus.

**10.** The method according to any one of claims 1 to 9, wherein the method further comprises:

sending, by the measurement initiation apparatus, a first report request message, wherein the first report request message indicates to report a measurement report; and
receiving, by the measurement initiation apparatus, a first measurement report from the at least one second measurement response apparatus, wherein the first measurement report comprises a measurement result of the first measurement message.

**11.** The method according to any one of claims 4 to 10, wherein before sending, by the measurement initiation apparatus, the first trigger request message, the method further comprises:

sending, by the measurement initiation apparatus, a second trigger request message, wherein the second trigger request message is used to determine a receive power for receiving, by the at least one second measurement response apparatus, a second measurement message from the first measurement response apparatus; and
determining, by the measurement initiation apparatus, the power control information in the first measurement template based on at least one receive power for the second measurement message.

**12.** A measurement method, comprising:

receiving, by a first measurement response apparatus, a first trigger request message from a measurement initiation apparatus, wherein the first trigger request message comprises a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and
sending, by the first measurement response apparatus, the first measurement message based on the first measurement template.

**13.** The method according to claim 12, wherein the first trigger request message further comprises a first seed sequence; and
the first seed sequence is used to update an identity of at least one of the at least one first measurement response apparatus and/or the at least one second measurement response apparatus.

**14.** The method according to claim 13, wherein when the first seed sequence is used to update an identity of one of the at least one first measurement response apparatus, the first measurement response apparatus whose identity is to be updated is updated to an apparatus that receives the first measurement message; and/or
when the first seed sequence is used to update an identity of one of the at least one second measurement response apparatus, the second measurement response apparatus whose identity is to be updated is updated to an apparatus that sends the first measurement message.

15. The method according to any one of claims 12 to 14, wherein the first measurement template comprises at least one of the following:

the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, wherein X is greater than 0;

receiver node quantity information indicating a quantity Y of the at least one second measurement response apparatus, wherein Y is greater than 0;

transmitter node information comprising X pieces of first information, wherein each piece of first information comprises at least one of the following: an apparatus identifier of a first measurement response apparatus; and power control information; and

receiver node information comprising Y pieces of second information, wherein each piece of second information comprises at least one of the following: an apparatus identifier of a second measurement response apparatus; and sender indication information indicating one or more of the at least one first measurement response apparatus.

16. The method according to claim 15, wherein a length of the apparatus identifier of the first measurement response apparatus is less than a length of an association identifier AID of the first measurement response apparatus or a length of a measurement session association identifier.

17. A measurement method, comprising:

receiving, by a second measurement response apparatus, a first trigger request message from a measurement initiation apparatus, wherein the first trigger request message comprises a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and

receiving, by the second measurement response apparatus, the first measurement message based on the first measurement template.

18. The method according to claim 17, wherein the first trigger request message further comprises a first seed sequence; and

the first seed sequence is used to update an identity of at least one of the at least one first measurement response apparatus and/or the at least one second measurement response apparatus.

19. The method according to claim 18, wherein when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

20. The method according to any one of claims 17 to 19, wherein the first measurement template comprises at least one of the following:

the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, wherein X is greater than 0;

receiver node quantity information indicating a quantity Y of the at least one second measurement response apparatus, wherein Y is greater than 0;

transmitter node information comprising X pieces of first information, wherein each piece of first information comprises at least one of the following: an apparatus identifier of a first measurement response apparatus; and power control information; and

receiver node information comprising Y pieces of second information, wherein each piece of second information comprises at least one of the following: an apparatus identifier of a second measurement response apparatus; and sender indication information indicating one or more of the at least one first measurement response apparatus.

21. The method according to claim 20, wherein a length of the apparatus identifier of the second measurement response apparatus is less than a length of an association identifier AID of the second measurement response apparatus or a length of a measurement session association identifier.

22. The method according to claim 20, wherein receiving, by the second measurement response apparatus, the first measurement message based on the first measurement template comprises:

receiving, by the second measurement response apparatus, the first measurement message from the first measurement response apparatus indicated by the sender indication information.

23. A communication apparatus, comprising:

a processing unit, configured to determine a first measurement template, wherein the first measurement template indicates at least one first measurement response apparatus and at least one second measurement response apparatus, the first measurement response apparatus is configured to send a first measurement message, and the second measurement response apparatus is configured to receive the first measurement message; and

a communication unit, configured to send a first trigger request message, wherein the first trigger request message comprises a first template identifier of the first measurement template.

24. The apparatus according to claim 23, wherein the first trigger request message further comprises a first seed sequence; and

the first seed sequence is used to update an identity of at least one of the at least one first measurement response apparatus and/or the at least one second measurement response apparatus.

25. The apparatus according to claim 24, wherein when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

26. The apparatus according to any one of claims 23 to 25, wherein the first measurement template comprises at least one of the following:

the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, wherein X is greater than 0;

receiver node quantity information indicating a quantity Y of the at least one second measurement response apparatus, wherein Y is greater than 0;

transmitter node information comprising X pieces of first information, wherein each piece of first information comprises at least one of the following: an apparatus identifier of a first measurement response apparatus; and power control information; and

receiver node information comprising Y pieces of second information, wherein each piece of second information comprises at least one of the following: an apparatus identifier of a second measurement response apparatus; and sender indication information indicating one or more of the at least one first measurement response apparatus.

27. The apparatus according to claim 26, wherein a length of the apparatus identifier of the first measurement response apparatus is less than a length of an association identifier AID of the first measurement response apparatus or a length of a measurement session association identifier.

28. The apparatus according to claim 26, wherein a length of the apparatus identifier of the second measurement response apparatus is less than a length of an association identifier AID of the second measurement response apparatus or a length of a measurement session association identifier.

29. The apparatus according to any one of claims 23 to 28, wherein the communication unit is further configured to: send a first sensing measurement setup message, wherein the first sensing measurement setup message comprises at least one of the following:

an apparatus identifier of the at least one first measurement response apparatus and an apparatus identifier of the at least one second measurement response apparatus; and
at least one measurement template, wherein the at least one measurement template comprises the first measurement template.

30. The apparatus according to any one of claims 23 to 29, wherein the first trigger request message further comprises first indication information, and when there is an apparatus that does not participate in measurement in the at least one first measurement response apparatus and the at least one second measurement response apparatus, the first indication information indicates a measurement response apparatus that actually sends the first measurement message and/or a measurement response apparatus that actually receives the first measurement message in the at least one first measurement response apparatus and the at least one second measurement response apparatus.

31. The apparatus according to claim 30, wherein the communication unit is further configured to: send a first sensing request message, wherein the first sensing request message is used to determine the apparatus that does not participate in measurement in the at least one first measurement response apparatus and the at least one second measurement response apparatus.

32. The apparatus according to any one of claims 23 to 31, wherein the communication unit is further configured to:

send a first report request message, wherein the first report request message indicates to report a measurement report; and
receive a first measurement report from the at least one second measurement response apparatus, wherein the first measurement report comprises a measurement result of the first measurement message.

33. The apparatus according to any one of claims 26 to 32, wherein the communication unit is further configured to:

send a second trigger request message, wherein the second trigger request message is used to determine a receive power for receiving, by the at least one second measurement response apparatus, a second measurement message from the first measurement response apparatus; and
determine the power control information in the first measurement template based on at least one receive power for the second measurement message.

34. A communication apparatus, comprising:

a processing unit, configured to receive a first trigger request message from a measurement initiation apparatus by using a communication unit, wherein the first trigger request message comprises a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and
the processing unit is configured to send the first measurement message based on the first measurement template by using the communication unit.

35. The apparatus according to claim 34, wherein the first trigger request message further comprises a first seed sequence; and
the first seed sequence is used to update an identity of at least one of the at least one first measurement response apparatus and/or the at least one second measurement response apparatus.

36. The apparatus according to claim 35, wherein when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

37. The apparatus according to any one of claims 34 to 36, wherein the first measurement template comprises at least one of the following:

the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, wherein X is greater than 0;

receiver node quantity information indicating a quantity Y of the at least one second measurement response apparatus, wherein Y is greater than 0;

transmitter node information comprising X pieces of first information, wherein each piece of first information comprises at least one of the following: an apparatus identifier of a first measurement response apparatus; and power control information; and

receiver node information comprising Y pieces of second information, wherein each piece of second information comprises at least one of the following: an apparatus identifier of a second measurement response apparatus; and sender indication information indicating one or more of the at least one first measurement response apparatus.

38. The apparatus according to claim 37, wherein a length of the apparatus identifier of the first measurement response apparatus is less than a length of an association identifier AID of the first measurement response apparatus or a length of a measurement session association identifier.

39. A communication apparatus, comprising:

a processing unit, configured to receive a first trigger request message from a measurement initiation apparatus by using a communication unit, wherein the first trigger request message comprises a first template identifier, a first measurement template corresponding to the first template identifier indicates at least one first measurement response apparatus and at least one second measurement response apparatus, the first measurement response apparatus is configured to send a first measurement message, and the second measurement response apparatus is configured to receive the first measurement message; and

the processing unit is configured to receive the first measurement message based on the first measurement template by using the communication unit.

40. The apparatus according to claim 39, wherein the first trigger request message further comprises a first seed sequence; and

the first seed sequence is used to update an identity of at least one of the at least one first measurement response apparatus and/or the at least one second measurement response apparatus.

41. The apparatus according to claim 40, wherein when the first seed sequence is used to update an identity of one of the at least one first measurement response apparatus, the first measurement response apparatus whose identity is to be updated is updated to an apparatus that receives the first measurement message; and/or

when the first seed sequence is used to update an identity of one of the at least one second measurement response apparatus, the second measurement response apparatus whose identity is to be updated is updated to an apparatus that sends the first measurement message.

42. The apparatus according to any one of claims 39 to 41, wherein the first measurement template comprises at least one of the following:

the first template identifier;

multiplexing type information indicating the at least one first measurement response apparatus to send the first measurement message in at least one of the following manners: time division multiplexing, frequency division multiplexing, and spatial division multiplexing;

transmitter node quantity information indicating a quantity X of the at least one first measurement response apparatus, wherein X is greater than 0;

receiver node quantity information indicating a quantity Y of the at least one second measurement response apparatus, wherein Y is greater than 0;

transmitter node information comprising X pieces of first information, wherein each piece of first information comprises at least one of the following: an apparatus identifier of a first measurement response apparatus; and power control information; and

receiver node information comprising Y pieces of second information, wherein each piece of second information comprises at least one of the following: an apparatus identifier of a second measurement response apparatus; and sender indication information indicating one or more of the at least one first measurement response apparatus.

43. The apparatus according to claim 42, wherein a length of the apparatus identifier of the second measurement response apparatus is less than a length of an association identifier AID of the second measurement response apparatus or a length of a measurement session association identifier.

44. The apparatus according to claim 42, wherein the processing unit is further configured to:
receive the first measurement message from the first measurement response apparatus indicated by the sender indication information.

45. A communication apparatus, comprising a processor and a memory, wherein
the processor is configured to execute a computer program or instructions stored in the memory, to enable the communication apparatus to implement the method according to any one of claims 1 to 22.

46. A chip, comprising a processor and a memory, wherein
the processor is configured to execute a computer program or instructions stored in the memory, to enable a communication apparatus comprising the chip to implement the method according to any one of claims 1 to 22.

47. A computer-readable storage medium, storing a computer program or instructions, wherein when the computer program or the instructions are run on a computer, the computer is enabled to implement the method according to any one of claims 1 to 22.

48. A computer program product, comprising instructions, wherein when the instructions are executed by a computer, the method according to any one of claims 1 to 22 is implemented.

FIG. 1

EP 4 686 250 A1

Measurement initiation phase | Measurement phase | Report phase

Step 211 | Step 212 | Step 213 | Step 214 | Step 215 | Step 216 | Step 217 | Step 218

**Measurement initiation apparatus A**: Sensing request message; Trigger message; Trigger message; Measurement report request message

**Measurement response apparatus B**: CTS-to-self; Measurement message; Measurement report

**Measurement response apparatus C**: CTS-to-self

**Measurement response apparatus D**: CTS-to-self; Measurement message; Measurement report

**Measurement response apparatus E**: CTS-to-self

FIG. 2

n measurement response apparatuses

Measurement initiation apparatus

Measurement response apparatus

First measurement response apparatus

Second measurement response apparatus

Optionally, step 301: The measurement initiation apparatus sends a first sensing request message

First sensing request message

Step 302: The measurement response apparatuses each send a first sensing response message

First sensing response message

Step 303: The measurement initiation apparatus determines a first measurement template

Step 304: The measurement initiation apparatus sends a first trigger request message

First trigger request message

TO FIG. 3B

TO FIG. 3B

TO FIG. 3B

TO FIG. 3B

FIG. 3A

CONT.
FROM
FIG. 3A

CONT.
FROM
FIG. 3A

CONT.
FROM
FIG. 3A

CONT.
FROM
FIG. 3A

Step 305: The first
measurement response
apparatus sends a first
measurement message
based on the first
measurement template

First
measurement
message

Step 306: The second
measurement response
apparatus receives the
first measurement
message based on the
first measurement
template

Optionally, step 307: The
measurement initiation apparatus
sends a first report request message

First report request message

Optionally, step 308:
The second
measurement response
apparatus sends a first
measurement report

First measurement report

FIG. 3B

| First template identifier | Multiplexing type information | Transmitter node quantity information | Receiver node quantity information | Transmitter node information | Receiver node information |
|---|---|---|---|---|---|

FIG. 4

| Apparatus identifier | Transceiver node flag information | Spacing information | Frequency offset information | HE-LTF offset information | Reserved bit |
|---|---|---|---|---|---|

FIG. 5

| Apparatus identifier | Transceiver node flag information | Sender indication information | Reserved bit |
|---|---|---|---|

FIG. 6

| Apparatus identifier | Transceiver node flag information | Sender indication information | Reserved bit |
|---|---|---|---|

| Apparatus identifier | Apparatus identifier | ... | Apparatus identifier |
|---|---|---|---|

One or more apparatus identifiers

FIG. 7

| | | Measurement initiation apparatus A | Measurement response apparatus B | Measurement response apparatus C | Measurement response apparatus D | Measurement response apparatus E |
|---|---|---|---|---|---|---|
| Report phase | Step 810 | | Measurement report | Measurement report | Measurement report | |
| | Step 809 | Measurement report request message | | | | |
| Measurement phase | Step 808 | | | | Measurement message | |
| | Step 807 | Second trigger request message | | | | |
| | Step 806 | | | Measurement message | | |
| | Step 805 | First trigger request message | | | | |
| Measurement initiation phase | Step 804 | | Sensing response message | Sensing response message | Sensing response message | Sensing response message |
| | Step 803 | Sensing request message | | | | |
| Measurement setup phase | Step 802 | | Sensing measurement setup response message | Sensing measurement setup response message | Sensing measurement setup response message | Sensing measurement setup response message |
| | Step 801 | Sensing measurement setup request message | | | | |

FIG. 8

| | | Measurement initiation apparatus A | Measurement response apparatus B | Measurement response apparatus C | Measurement response apparatus D | Measurement response apparatus E |
|---|---|---|---|---|---|---|
| Report phase | Step 910 | | Measurement report | Measurement report | Measurement report | |
| | Step 909 | Measurement report request message | | | | |
| Measurement phase | Step 908 | | | | Measurement message | Measurement message |
| | Step 907 | Second trigger request message | | | | |
| | Step 906 | | | Measurement message | | Measurement message |
| | Step 905 | First trigger request message | | | | |
| Measurement initiation phase | Step 904 | | Sensing response message | Sensing response message | Sensing response message | Sensing response message |
| | Step 903 | Sensing request message | | | | |
| Measurement setup phase | Step 902 | | Sensing measurement setup response message | Sensing measurement setup response message | Sensing measurement setup response message | Sensing measurement setup response message |
| | Step 901 | Sensing measurement setup request message | | | | |

FIG. 9

Start

Step 1001: Add, to an edge set E, all links to be measured

Step 1002: Plan a new round of measurement interaction

Step 1003: Select one measurement response apparatus from idle nodes as a transmitter node

Step 1004: Is the edge set E empty?

Yes

No

Step 1005: Is there still an idle node?

Yes

No

Step 1006: Output a measurement template for each round of measurement interaction

FIG. 10

**Measurement setup update phase**

- Step 1119 — Sensing measurement setup response message (apparatus B) | Sensing measurement setup response message (apparatus C) | Sensing measurement setup response message (apparatus D)
- Step 1118 — Sensing measurement setup request message

**Attenuation estimation phase**

- Measurement report (apparatus B) | Measurement report (apparatus C) | Measurement report (apparatus D)
- Step 1117 — Measurement report request message
- Measurement message (apparatus D)
- Step 1116 — Trigger request message 3
- Measurement message (apparatus C)
- Step 1115 — Trigger request message 2
- Measurement message (apparatus B)
- Step 1114 — Trigger request message 1
- Sensing response message (apparatus B) | Sensing response message (apparatus C) | Sensing response message (apparatus D)
- Step 1113 — Sensing request message

**Measurement setup phase**

- Step 1112 — Sensing measurement setup response message (apparatus B) | Sensing measurement setup response message (apparatus C) | Sensing measurement setup response message (apparatus D)
- Step 1111 — Sensing measurement setup request message

Measurement initiation apparatus A | Measurement response apparatus B | Measurement response apparatus C | Measurement response apparatus D

FIG. 11

| | Measurement initiation apparatus A | Measurement response apparatus B | Measurement response apparatus C | Measurement response apparatus D |
|---|---|---|---|---|
| Step 1209 | | Sensing measurement setup response message | Sensing measurement setup response message | Sensing measurement setup response message |
| Step 1208 | Sensing measurement setup request message | | | |
| | | | Measurement report | Measurement report |
| Step 1207 | Measurement report request message | | | |
| Step 1206 | Trigger request message | | | |
| | | Sensing response message | Sensing response message | Sensing response message |
| Step 1205 | Sensing request message | | | |
| Step 1204 | | Sensing measurement setup response message | Sensing measurement setup response message | Sensing measurement setup response message |
| Step 1203 | Sensing measurement setup request message | | | |
| | | | | Measurement report |
| Step 1202 | Measurement report request message | | | |
| | | Measurement message | Measurement message | |
| Step 1201 | Trigger request message 3 | | | |

FIG. 12

1300

1301

Processing unit

1302

Communication unit

FIG. 13

Communication apparatus 1400

Processor 1410

Memory 1430

Communication interface 1420

FIG. 14

## INTERNATIONAL SEARCH REPORT

| International application No. |
| --- |
| **PCT/CN2024/088095** |

**A.    CLASSIFICATION OF SUBJECT MATTER**

H04W24/02(2009.01)i;  H04W4/38(2018.01)i

According to International Patent Classification (IPC) or to both national classification and IPC

**B.    FIELDS SEARCHED**

Minimum documentation searched (classification system followed by classification symbols)

IPC:  H04W,  H04L,  H04B

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, IEEE: 感知, 测量, 发起, 响应, 接收, 模板, 请求, 同时, 消息, 指示, 触发, 多个, 控制, 协调, 资源, 占用, sensing, measurement, AP, STA, multi+, NDP, trigger, template, request, initiator, responder, reciver, resource

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115623456 A (HUAWEI TECHNOLOGIES CO., LTD.) 17 January 2023 (2023-01-17) description, paragraphs [0136]-[0228], [0421]-[0424], and [0434]-[0442], and figures 6a, 10a, 10b, and 12 | 1, 4-6, 10, 12, 15-17, 20-23, 26-28, 32, 34, 37-39, 42-48 |
| A | WO 2022261409 A1 (INTERDIGITAL PATENT HOLDINGS, INC.) 15 December 2022 (2022-12-15) entire document | 1-48 |
| A | CN 115515174 A (CHENGDU XGIMI TECHNOLOGY CO., LTD.) 23 December 2022 (2022-12-23) entire document | 1-48 |
| A | WO 2022055182 A1 (LG ELECTRONICS INC.) 17 March 2022 (2022-03-17) entire document | 1-48 |
| A | WO 2023283240 A1 (INTERDIGITAL PATENT HOLDINGS, INC.) 12 January 2023 (2023-01-12) entire document | 1-48 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 July 2024** | **08 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088095**

| Patent document cited in search report | | | Publication date (day/month/year) | Patent family member(s) | | | Publication date (day/month/year) |
|---|---|---|---|---|---|---|---|
| CN | 115623456 | A | 17 January 2023 | CA | 3225941 | A1 | 19 January 2023 |
| | | | | WO | 2023284544 | A1 | 19 January 2023 |
| | | | | AU | 2022312013 | A1 | 25 January 2024 |
| | | | | KR | 20240031405 | A | 07 March 2024 |
| | | | | EP | 4358574 | A1 | 24 April 2024 |
| WO | 2022261409 | A1 | 15 December 2022 | TW | 202312721 | A | 16 March 2023 |
| | | | | KR | 20240032833 | A | 12 March 2024 |
| | | | | EP | 4353046 | A1 | 17 April 2024 |
| | | | | CN | 117769849 | A | 26 March 2024 |
| CN | 115515174 | A | 23 December 2022 | | None | | |
| WO | 2022055182 | A1 | 17 March 2022 | US | 2023362990 | A1 | 09 November 2023 |
| | | | | JP | 2023541594 | A | 03 October 2023 |
| | | | | EP | 4213534 | A1 | 19 July 2023 |
| | | | | US | 2024023161 | A1 | 18 January 2024 |
| | | | | KR | 20230043140 | A | 30 March 2023 |
| | | | | CN | 116326093 | A | 23 June 2023 |
| WO | 2023283240 | A1 | 12 January 2023 | | None | | |

Form PCT/ISA/210 (patent family annex) (July 2022)

**REFERENCES CITED IN THE DESCRIPTION**

**Patent documents cited in the description**

- CN 202310424395